(19) **Europäisches Patentamt / European Patent Office / Office européen des brevets**

(11) **EP 4 654 282 A1**

(12) **EUROPEAN PATENT APPLICATION**
published in accordance with Art. 153(4) EPC

(43) Date of publication:
26.11.2025 Bulletin 2025/48

(21) Application number: 23933873.4

(22) Date of filing: 08.12.2023

(51) International Patent Classification (IPC):
$H01M\ 4/134^{(2010.01)}$  $H01M\ 4/36^{(2006.01)}$
$H01M\ 4/38^{(2006.01)}$  $H01M\ 4/40^{(2006.01)}$
$H01M\ 4/58^{(2010.01)}$  $H01M\ 4/60^{(2006.01)}$

(52) Cooperative Patent Classification (CPC):
Y02E 60/10

(86) International application number:
PCT/CN2023/137467

(87) International publication number:
WO 2024/217008 (24.10.2024 Gazette 2024/43)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 19.04.2023 CN 202310423012

(71) Applicant: Contemporary Amperex Technology Co., Limited
Ningde, Fujian 352100 (CN)

(72) Inventors:
• XUE, Wenwen
  Ningde, Fujian 352100 (CN)

• LIU, Chengyong
  Ningde, Fujian 352100 (CN)
• HE, Xiaoning
  Ningde, Fujian 352100 (CN)
• SONG, Shaokang
  Ningde, Fujian 352100 (CN)
• YANG, Wu
  Ningde, Fujian 352100 (CN)

(74) Representative: Ziebig Hengelhaupt Intellectual Property Attorneys
Patentanwaltskanzlei PartGmbB
Leipziger Straße 49
10117 Berlin (DE)

(54) **NEGATIVE ELECTRODE SHEET AND PREPARATION METHOD THEREFOR, BATTERY CELL, BATTERY AND ELECTRIC DEVICE**

(57) The present application discloses a negative electrode plate and a preparation method therefor, a battery cell, a battery, and an electric device. The negative electrode plate includes a negative electrode substrate and an organic-inorganic composite layer located on at least one surface of the negative electrode substrate, the negative electrode substrate includes a first substrate layer close to the organic-inorganic composite layer, the first substrate layer includes a first metal material, the first metal material includes one or a plurality of elemental lithium or a lithium alloy, the organic-inorganic composite layer includes a polymer and a first inorganic component, the first inorganic component includes one or a plurality of LiI, LiF, $Li_2S$, $Li_3N$, or $Li_3P$, and the peel strength between the organic-inorganic composite layer and the negative electrode substrate is greater than or equal to 500 N/m.

FIG. 1

EP 4 654 282 A1

**Description**

CROSS-REFERENCE TO RELATED APPLICATIONS

The present application claims priority to Chinese Patent Application No. 202310423012.4, filed on April 19, 2023 and entitled "Negative Electrode Plate and Preparation Method Therefor, Battery Cell, Battery, and Electric Device", which is incorporated herein by reference in its entirety.

TECHNICAL FIELD

The present application relates to a negative electrode plate and a preparation method therefor, a battery cell, a battery, and an electric device.

BACKGROUND

In recent years, batteries have been widely used in energy storage power systems, such as hydropower, firepower, wind power, and solar power stations, as well as the fields of smart phones, tablets, smart wearables, power tools, electric bicycles, electric motorcycles, electric vehicles, military equipment, aerospace, or the like. As the battery is applied more and more widely, the battery requires a battery system having a higher energy density than that of a conventional battery using a carbon-based material as a negative electrode. A battery in which a material such as lithium metal is used as a negative electrode has the high energy density. However, the cycle life of the battery is relatively short. The above statement merely provides the background information related to the present application and do not necessarily constitute the prior art.

SUMMARY

The present application provides a negative electrode plate and a preparation method therefor, a battery cell, a battery, and an electric device, which may increase the cycle life of the battery.

According to a first aspect, the present application provides a negative electrode plate, comprising a negative electrode substrate and an organic-inorganic composite layer located on at least one surface of the negative electrode substrate, wherein the negative electrode substrate comprises a first substrate layer close to the organic-inorganic composite layer, the first substrate layer comprises a first metal material, the first metal material comprises one or a plurality of elemental lithium or a lithium alloy, the organic-inorganic composite layer comprises a polymer and a first inorganic component, the first inorganic component comprises one or a plurality of $LiI$, $LiF$, $Li_2S$, $Li_3N$, or $Li_3P$, and the peel strength between the organic-inorganic composite layer and the negative electrode substrate is greater than or equal to 500 N/m.

The organic-inorganic composite layer of the negative electrode plate provided in embodiments of the present application is compact and uniform, has the functions of uniformizing an ion field and regulating a deposition behavior of lithium metal, may be closely combined with the negative electrode substrate, and may also have good elasticity, suitable electrolyte solution swelling ratio, relatively high ionic conductivity and relatively high elastic modulus. Therefore, by using the negative electrode plate provided in the embodiments of the present application, side reactions may be reduced, consumption of the electrolyte solution and the first metal material may be reduced, capacity losses of the battery may be reduced, and volume expansion of a negative electrode side during charging may also be reduced, so that the battery has high coulombic efficiency, high energy density, and long cycle life. In addition, the formation of lithium dendrites may be reduced, the probability of the lithium dendrites penetrating a separator may be reduced, the probability of short circuit of the battery may be reduced, and the reliability of the battery may be improved.

In any embodiment, the peel strength between the organic-inorganic composite layer and the negative electrode substrate is 600 N/m to 3200 N/m, optionally 800 N/m to 2800 N/m. Therefore, volume expansion of the negative electrode side during charging may be better reduced, and the probability of peeling off the organic-inorganic composite layer from a surface of the negative electrode substrate may be reduced, so that the function of the organic-inorganic composite layer may be exerted for a long time, and the cycle life of the battery may be prolonged.

In any embodiment, the organic-inorganic composite layer has the elastic modulus of 0.1 MPa to 70 MPa, optionally 19 MPa to 53 MPa. When the elastic modulus of the organic-inorganic composite layer is within the above-described range, the probability of the lithium dendrite penetrating the separator may be reduced, the probability of short circuit of the battery may be reduced, and the reliability of the battery may be improved.

In any embodiment, the organic-inorganic composite layer has the elastic deformation of 7% to 700%, optionally 9% to 310%. When the elastic deformation of the organic-inorganic composite layer is within the above-described range, it is beneficial to being compatible with volume expansion of the negative electrode side during charging, and reducing the probability of fracture or cracking of the organic-inorganic composite layer, so that the function of the organic-inorganic composite layer may be exerted for a long time, and the cycle life of the battery may be prolonged.

In any embodiment, the organic-inorganic composite layer at 25°C has the electrolyte solution swelling ratio of 9% to 60%, optionally 11% to 38%. When the electrolyte solution swelling ratio of the organic-inorganic composite layer is within the above-described range, it may promote efficient transfer of ions inside the organic-inorganic composite layer and at an interface with the negative electrode substrate, which is beneficial to improving the cycle performance and the dynamic performance of the battery.

In any embodiment, the organic-inorganic composite layer at 25 °C has the ionic conductivity of 0.001 mS/cm to 5 mS/cm, optionally 0.03 mS/cm to 3.4 mS/cm. When the ionic conductivity of the organic-inorganic composite layer is within the above-described range, it is beneficial to efficient transfer of the ions inside the organic-inorganic composite layer and at the interface with the negative electrode substrate, and is beneficial to improving the cycle performance and the dynamic performance of the battery.

In any embodiment, the thickness of the organic-inorganic composite layer is 0.005 $\mu$m to 10 $\mu$m, optionally 0.02 $\mu$m to 5 $\mu$m. When the thickness of the organic-inorganic composite layer is within the above-described range, side reactions may be reduced, consumption of the electrolyte solution and the first metal material may be reduced, capacity losses of the battery may be reduced, the battery may have high coulombic efficiency, high energy density, and long cycle life, the deposition behavior of lithium metal may be regulated, the formation of lithium dendrites may be reduced, the probability of the lithium dendrites penetrating the separator may be reduced, the probability of short circuit of the battery may be reduced, and the reliability of the battery may be improved. In addition, the negative electrode plate may have relatively high ionic conductivity and relatively low interface resistance, thereby being beneficial to improving the cycle performance and the dynamic performance of the battery.

In any embodiment, the organic-inorganic composite layer comprises a first surface close to the negative electrode substrate and a second surface away from the negative electrode substrate. The mass content of the first inorganic component at the first surface is denoted as $W_1$, the mass content of the first inorganic component at the second surface is denoted as $W_2$, and $W_1 > W_2$. Therefore, the regulation effect of the organic-inorganic composite layer on the deposition behavior of lithium metal may be enhanced, further reducing the formation of lithium dendrites.

In any embodiment, based on the total weight of the organic-inorganic composite layer, the content of the polymer in the organic-inorganic composite layer is denoted as a, the content of the first inorganic component is denoted as b, and a:b is 1:5 to 5:1, optionally 1:3 to 3:1. When the weight ratio of the polymer to the first inorganic component is within the above-described range, the organic-inorganic composite layer may have high elastic modulus, high elastic deformation, and high ionic conductivity, and may further reduce volume expansion of the negative electrode side during charging, reduce the formation of lithium dendrites, and improve the cycle performance of the battery.

In any embodiment, based on the total weight of the organic-inorganic composite layer, the content of the polymer in the organic-inorganic composite layer is denoted as a, and a is 8wt% to 80wt%, optionally 14wt% to 71wt%.

In any embodiment, based on the total weight of the organic-inorganic composite layer, the content of the first inorganic component in the organic-inorganic composite layer is denoted as b, and b is 8wt% to 80wt%, optionally 14wt% to 71wt%.

In any embodiment, the organic-inorganic composite layer further comprises a second inorganic component.

In any embodiment, the second inorganic component comprises one or a plurality of a lithium salt or a solid electrolyte. Therefore, the elastic modulus and/or the ionic conductivity of the organic-inorganic composite layer may be adjusted, thereby being beneficial to improving the cycle performance and/or the dynamic performance of the battery.

In any embodiment, based on the total weight of the organic-inorganic composite layer, the total content of the second inorganic component in the organic-inorganic composite layer is denoted as c, and c is greater than 0 and less than or equal to 55wt%, optionally 5wt% to 50wt%. When the total content of the second inorganic component is within the above-described range, one or a plurality of the elastic modulus, the ionic conductivity, the electrolyte solution swelling ratio, or the elastic deformation of the organic-inorganic composite layer may be adjusted, thereby being beneficial to improving the cycle performance and/or the dynamic performance of the battery.

In any embodiment, the lithium salt comprises one or a plurality of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium bis(oxalato)borate, lithium difluoro(oxalato)borate, lithium difluoro bis(oxalato)phosphate, lithium tetrafluoro(oxalato)phosphate, lithium difluorophosphate, or lithium trifluoromethanesulfonate.

In any embodiment, the solid electrolyte comprises one or a plurality of an oxide-type inorganic solid electrolyte, a sulfide-type inorganic solid electrolyte, or a halide-type inorganic solid electrolyte. Optionally, the oxide-type inorganic solid electrolyte comprises one or a plurality of an NASICON-type solid electrolyte, a gamet-type solid electrolyte, a perovskite-type solid electrolyte, or a LISICON-type solid electrolyte. Optionally, the sulfide-type inorganic solid electrolyte comprises one or a plurality of a sulfide-type crystalline solid electrolyte or a sulfide glass-type solid electrolyte.

In any embodiment, the organic-inorganic composite layer further comprises a third inorganic component.

In any embodiment, the third inorganic component comprises one or a plurality of a film-forming additive or an inorganic filler. Therefore, the film formation quality of a negative electrode may be improved, and one or a plurality of the elastic modulus, the ionic conductivity, the electrolyte solution swelling ratio, or the elastic deformation of the organic-inorganic composite layer may also be adjusted, thereby being beneficial to improving the cycle performance and/or the dynamic performance of the battery.

In any embodiment, based on the total weight of the organic-inorganic composite layer, the total content of the third inorganic component in the organic-inorganic composite layer is denoted as d, and d is greater than 0 and less than or equal to 20wt%.

In any embodiment, the film-forming additive comprises one or a plurality of fluoroethylene carbonate, vinylene carbonate, vinylethylene carbonate, ethylene sulfate, propylene sulfite, ethylene sulfite, diethyl sulfite, dimethyl sulfite, butanesultone, or tris(trimethylsilyl) phosphate.

In any embodiment, the inorganic filler comprises one or a plurality of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, or barium titanate.

In any embodiment, the volume distribution particle size Dv50 of the first inorganic component is less than or equal to 80 nm, optionally 10 nm to 30 nm. Therefore, the interface impedance of the battery may be reduced, and the cycle performance and/or the dynamic performance of the battery may be improved.

In any embodiment, the polymer comprises one or a plurality of a polymer with high viscosity, a polymer with an ion conduction function, or a polymer able to react with the first metal material.

In any embodiment, the polymer comprises one or a plurality of poly(methyl acrylate), polyurethane, natural rubber, polyisoprene, polystyrene, polyether, polyethylene oxide, polycarbonate, poly(methyl methacrylate), ionomer, polyacrylonitrile, polycyanoacrylate, polymethacrylic acid, hydrogenated nitrile rubber, polyvinyl alcohol, or respective derivatives thereof.

In any embodiment, the first substrate layer further comprises a first negative electrode active material. Optionally, the first negative electrode active material comprises a carbon-based material, and more optionally comprises one or a plurality of graphite or hard carbon.

In any embodiment, the negative electrode substrate further comprises a negative electrode current collector layer away from the organic-inorganic composite layer, and the first substrate layer is located on at least one surface of the negative electrode current collector layer.

In any embodiment, the negative electrode substrate further comprises a second negative electrode active material layer located between the first substrate layer and the negative electrode current collector layer, and the second negative electrode active material layer comprises a second negative electrode active material.

In any embodiment, the second negative electrode active material comprises one or a plurality of a carbon-based material, lithium titanate, or a silicon-based material.

According to a second aspect, the present application provides a method for preparing a negative electrode plate, comprising the following steps of: providing a negative electrode substrate, wherein the negative electrode substrate comprises a first substrate layer, the first substrate layer comprises a first metal material, and the first metal material comprises one or a plurality of elemental lithium or a lithium alloy; providing a first reaction component, wherein the first reaction component comprises one or a plurality of $I_2$, S, $N_2$, or P; and carrying out a contact reaction between the first reaction component and the first metal material in the first substrate layer to form a first inorganic component in situ on a surface of the first substrate layer, wherein the first inorganic component comprises one or a plurality of LiI, LiF, $Li_2S$, $Li_3N$, or $Li_3P$; providing a coating solution, wherein the coating solution comprises a polymer and/or a monomer used for forming the polymer; coating the surface of the first substrate layer with the coating solution, forming an organic-inorganic composite layer after a reaction to obtain a negative electrode plate, wherein the reaction comprises at least one of a reaction between the polymer and the first metal material and/or the first inorganic component and an in-situ polymerization reaction of the monomer.

First inorganic particles and the polymer in the organic-inorganic composite layer formed by the preparation method provided in the embodiments of the present application may be uniformly compounded, and the formed organic-inorganic composite layer is more compact and uniform, so that the formation of lithium dendrites may be reduced, contact between the electrolyte solution and the first metal material in the negative electrode substrate may be reduced, side reactions may be reduced, and consumption of the electrolyte solution and the first metal material may be reduced, thereby reducing capacity losses of the battery. Volume expansion of the negative electrode side during charging may also be reduced, so that the battery has high coulombic efficiency, high energy density, and long cycle life. Meanwhile, the elastic modulus of the organic-inorganic composite layer is improved, thereby reducing the probability of the lithium dendrites penetrating the separator, reducing the probability of short circuit of the battery, and improving the reliability of the battery.

In any embodiment, a manner for carrying out the contact reaction between the first reaction component and the first metal material in the first substrate layer involves evaporation, optionally vacuum evaporation or physical evaporation.

In any embodiment, the first reaction component is in the form of vapor.

The first inorganic component is obtained by an in-situ reaction between the vapor and the first metal material, so that the first inorganic component particles may be more nano-sized, and compact and uniform.

In any embodiment, the reaction temperature of the contact reaction between the first reaction component and the first metal material in the first substrate layer is 30°C to 200°C, optionally 50°C to 180°C.

In any embodiment, the reaction time of the contact reaction between the first reaction component and the first metal material in the first substrate layer is less than or equal to 5h, optionally less than or equal to 2h.

In any embodiment, the coating solution further comprises one or a plurality of an initiator, a lithium salt, or a solid electrolyte.

According to a third aspect, the present application provides a battery cell, comprising an electrode assembly, wherein the electrode assembly comprises the negative electrode plate according to the first aspect of the present application or the negative electrode plate prepared by the method according to the second aspect of the present application.

According to a fourth aspect, the present application provides a battery, comprising the battery cell according to the third aspect of the present application.

According to a fifth aspect, the present application provides an electric device, comprising the battery according to the fourth aspect of the present application.

The electric device of the present application includes the battery provided by the present application, and thereby has at least the same advantages as the battery.

DESCRIPTION OF DRAWINGS

In order to more clearly illustrate the technical solutions in the embodiments of the present application, drawings required to be used in the embodiments of the present application are briefly described below. It is clear that the drawings described below show only some embodiments of the present application, and those skilled in the art may further derive other drawings from the drawings without creative effort.

FIG. 1 is a schematic diagram of an embodiment of a battery cell according to the present application.

FIG. 2 is a schematic exploded view of an embodiment of a battery cell of the present application.

FIG. 3 is a schematic diagram of an embodiment of a battery module according to the present application.

FIG. 4 is a schematic diagram of an embodiment of a battery pack according to the present application.

FIG. 5 is a schematic exploded view of the embodiment of the battery pack shown in FIG. 4.

FIG. 6 is a schematic diagram of an embodiment of a negative electrode plate according to the present application.

FIG. 7 is a schematic diagram of another embodiment of a negative electrode plate according to the present application.

FIG. 8 is a schematic diagram of yet another embodiment of a negative electrode plate according to the present application.

FIG. 9 is a schematic diagram of yet another embodiment of a negative electrode plate according to the present application.

FIG. 10 is a schematic diagram of yet another embodiment of a negative electrode plate according to the present application.

FIG. 11 is a schematic diagram of an embodiment of an electric device including a battery of the present application as a power supply.

The figures are not necessarily drawn to the actual scale. Description of reference numerals: 1, battery pack; 2, upper box body; 3, lower box body; 4, battery module; 5, battery cell; 51, housing; 52, electrode assembly; 53, cover plate; 10, negative electrode plate; 101, negative electrode substrate; 102, organic-inorganic composite layer; 1011, first substrate layer; 1012, negative electrode current collector layer; 1013, second negative electrode active material layer.

DESCRIPTION OF EMBODIMENTS

Embodiments of a negative electrode plate and a preparation method therefor, a battery cell, a battery, and an electric device of the present application are described below in detail with appropriate reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the disclosure of the present application.

Unless otherwise specified, all technical solutions and optional technical solutions of the present application may be combined with each other to form new technical solutions, and it is conceivable that such technical solutions should be included in the disclosure of the present application.

Unless otherwise specified, all steps in the present application may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In the present application, terms "first", "second", and the like are used to distinguish different objects and are not intended to describe a particular order or primary/secondary relationship, unless otherwise specified.

Unless otherwise specified, the terms used in the present application have the meanings commonly understood by those skilled in the art.

Unless otherwise specified, the numerical values of each parameter mentioned in the present application may be measured by various test methods commonly used in the art, for example, they can be measured according to test methods provided in the embodiments of the present application. A test temperature for each parameter is 25°C, unless otherwise specified.

In the present application, the term "monomer used for forming the polymer" includes both a monomer and an oligomer.

A battery mentioned in the embodiments of the present application refers to a single physical module including one or a plurality of battery cells to provide a higher voltage and capacity. For example, the battery mentioned in the present application may include a battery cell, a battery module, a battery pack, or the like.

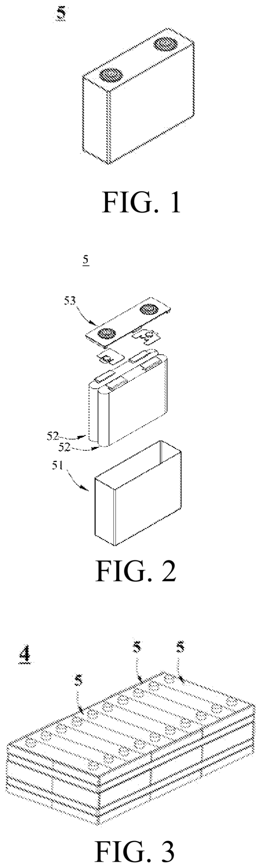

The battery cell is a minimum unit constituting a battery, which can implement charge and discharge functions alone. The battery cell may be in the shape of a cylinder, a flat body, a cuboid, or the like, which is not limited in the embodiments of the present application. FIG. 1 shows a battery cell 5 of a cuboid structure as an example.

When there are a plurality of battery cells, the plurality of battery cells are connected in series, in parallel, or in series-parallel via a busbar component. In some embodiments, the battery may be a battery module; and when there are a plurality of battery cells, the plurality of battery cells are arranged and fixed to form a battery module. In some embodiments, the battery may be a battery pack including a box and a battery cell, and the battery cell or the battery module is accommodated in the box. In some embodiments, the box may be a part of a chassis structure of a vehicle. For example, a part of the box body may be at least part of a chassis of a vehicle, or a part of the box body may be at least part of a transverse beam and a longitudinal beam of a vehicle.

In some embodiments, the battery may be an energy storage device. The energy storage device includes an energy storage container, an energy storage cabinet, and the like.

The battery cell mentioned in the embodiments of the present application includes a battery cell using lithium metal and alloys thereof as negative electrode active materials. For example, the battery cell provided in the embodiments of the present application may include a lithium metal battery cell, a lithium air battery cell, a lithium sulfur battery cell, or the like, which is not limited in the embodiments of the present application.

The battery cell generally includes an electrode assembly. The electrode assembly generally includes a positive electrode plate, a negative electrode plate, and a separator located between the positive electrode plate and the negative electrode plate. The electrode assembly may be of a winding structure or a laminated structure, which is not limited in the embodiments of the present application.

The battery cell may further include an outer package. The outer package may be used for packaging the above-described electrode assembly and an electrolyte solution. The outer package may be a hard shell, such as a hard plastic shell, an aluminum shell, or a steel shell. The outer package may also be a pouch, such as a bag-type pouch. The material of the pouch may be plastic, such as one or more of polypropylene (PP), polybutylene terephthalate (PBT), and polybutylene succinate (PBS).

In some embodiments, as shown in FIG. 2, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The electrode assembly 52 is packaged in the accommodating chamber. The battery cell 5 may have one or more electrode assemblies 52, and the number of the electrode assemblies may be adjusted as needed.

In some embodiments, the battery cells may be assembled into a battery module. The battery module may include a plurality of battery cells, and the specific number of the battery cells may be adjusted according to application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the secondary batteries may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some embodiments, the battery modules described above may be assembled into a battery pack, and the number of battery modules included in the battery pack may be adjusted according to the application and capacity of the battery pack.

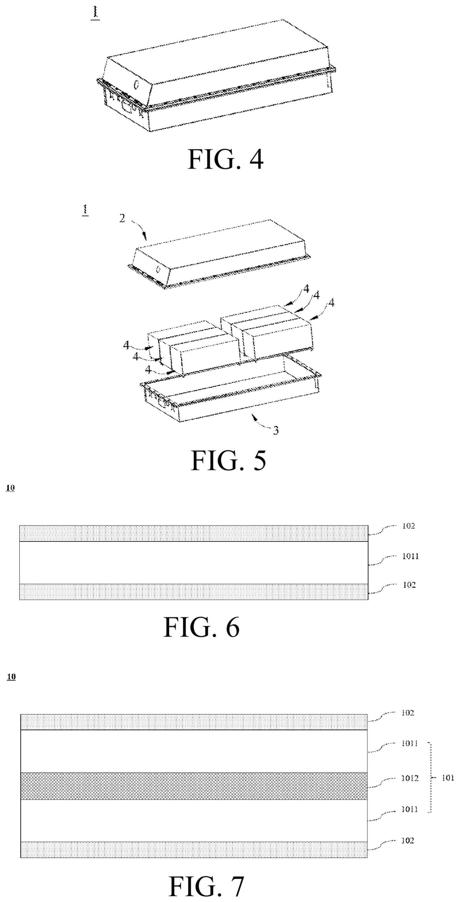

FIG. 4 and FIG. 5 are schematic diagrams of a battery pack 1 as an example. As shown in FIG. 4 and FIG. 5, the battery pack 1 may include a box body and a plurality of battery modules 4 disposed in the box body. The box body includes an upper box body 2 and a lower box body 3, where the upper box body 2 is configured to cover the lower box body 3 to form a closed space for accommodating the battery modules 4. The plurality of battery modules 4 may be arranged in the box body in any manner.

High energy density is an irreversible trend of battery development in the future. Lithium metal batteries have received widespread attention due to their high energy density. However, large-scale application of lithium metal batteries faces many challenges. For example, lithium metal has high reactivity and is easy to have side reactions with the electrolyte solution, which consumes the electrolyte solution and lithium, and produces a thick passivation layer, resulting in rapid capacity decay and short cycle life of the battery after cycling. In addition, during charging, regional differences between an ion flow and an electron flow easily leads to uneven deposition on a surface of a negative electrode, which may easily form lithium dendrites. On the one hand, the specific surface area of the lithium dendrites is relatively high, which may aggravate consumption of the electrolyte solution and even cause voltage drop of the battery. On the other hand, the lithium dendrites grow quickly and may penetrate the separator, increasing the risk of short circuit of the battery.

In view of this, the negative electrode plate is improved by the inventors.

FIG. 6 to FIG. 10 are schematic diagrams of different embodiments of the negative electrode plate of the present application. Referring to FIG. 6 to FIG. 10, a negative electrode plate 10 provided in the embodiments of the present application includes a negative electrode substrate 101 and an organic-inorganic composite layer 102 located on at least one surface of the negative electrode substrate 101. The negative electrode substrate 101 includes a first substrate layer 1011 close to the organic-inorganic composite layer 102. The first substrate layer 1011 includes a first metal material. The first metal material includes one or a plurality of elemental lithium or a lithium alloy. The organic-inorganic composite layer 102 includes a polymer and a first inorganic component. The first inorganic component includes one or a plurality of LiI, LiF,

$Li_2S$, $Li_3N$, or $Li_3P$. The peel strength between the organic-inorganic composite layer 102 and the negative electrode substrate 101 is greater than or equal to 500 N/m.

The first inorganic component in the organic-inorganic composite layer includes one or a plurality of LiI, LiF, $Li_2S$, $Li_3N$, or $Li_3P$. These inorganic components have the functions of uniformizing an ion field and regulating a deposition behavior of lithium metal, thereby reducing the formation of lithium dendrites, reducing volume expansion of a negative electrode side during charging, and reducing the probability of fracture or cracking of the organic-inorganic composite layer due to the growth of lithium dendrites or interface displacement. The first inorganic component in the organic-inorganic composite layer may also reduce the probability of forming lithium dendrites with sharp shapes during charging and discharging, and may reduce the probability of the lithium dendrites penetrating a separator, thereby reducing the probability of short circuit of the battery and improving the reliability of the battery. In addition, the first inorganic component may adjust a swelling behavior of the organic-inorganic composite layer in the electrolyte solution, improve the ionic conductivity of the organic-inorganic composite layer, reduce the interface impedance of the battery, and promote efficient transfer of ions inside the organic-inorganic composite layer and at an interface with the negative electrode substrate.

The polymer in the organic-inorganic composite layer may fill gaps between first inorganic component particles, so that the organic-inorganic composite layer is more compact and uniform, thereby reducing contact between the electrolyte solution and the first metal material in the first substrate layer, reducing side reactions, and reducing consumption of the electrolyte solution and the first metal material. Therefore, capacity losses of the battery may be reduced, and the battery has high coulombic efficiency and high energy density. Due to the polymer, the organic-inorganic composite layer may have good elasticity, thereby being beneficial to being compatible with volume expansion of the negative electrode side during charging, and reducing the probability of fracture or cracking of the organic-inorganic composite layer, so that the function of the organic-inorganic composite layer may be exerted for a long time, and the cycle life of the battery may be prolonged.

The organic-inorganic composite layer includes the polymer and the first inorganic component, so that the organic-inorganic composite layer may have suitable electrolyte solution swelling ratio and relatively high ionic conductivity, thereby being beneficial to efficient transfer of the ions inside the organic-inorganic composite layer and at the interface with the negative electrode substrate, and the organic-inorganic composite layer may have relatively high elastic modulus, reducing the probability of the lithium dendrites penetrating the separator, reducing the probability of short circuit of the battery, and improving the reliability of the battery.

The peel strength between the organic-inorganic composite layer and the negative electrode substrate is greater than or equal to 500 N/m, so that the organic-inorganic composite layer is closely combined with the negative electrode substrate, which may reduce volume expansion of the negative electrode side during charging, and may further reduce the probability of peeling off the organic-inorganic composite layer from the surface of the negative electrode substrate. Therefore, the function of the organic-inorganic composite layer may be exerted for a long time, and the cycle life of the battery may be prolonged.

The organic-inorganic composite layer of the negative electrode plate provided in embodiments of the present application is compact and uniform, has the functions of uniformizing an ion field and regulating a deposition behavior of lithium metal, may be closely combined with the negative electrode substrate, and may also have good elasticity, suitable electrolyte solution swelling ratio, relatively high ionic conductivity and relatively high elastic modulus. Therefore, by using the negative electrode plate provided in the embodiments of the present application, side reactions may be reduced, consumption of the electrolyte solution and the first metal material may be reduced, capacity losses of the battery may be reduced, and volume expansion of the negative electrode side during charging may also be reduced, so that the battery has high coulombic efficiency, high energy density, and long cycle life. In addition, the formation of lithium dendrites may be reduced, the probability of the lithium dendrites penetrating the separator may be reduced, the probability of short circuit of the battery may be reduced, and the reliability of the battery may be improved.

In some embodiments, the peel strength between the organic-inorganic composite layer 102 and the negative electrode substrate 101 may be 600 N/m to 3200 N/m, optionally 800 N/m to 2800 N/m, 800 N/m to 2550 N/m, 800 N/m to 2400 N/m, 1200 N/m to 2800 N/m, 1200 N/m to 2550 N/m, 1200 N/m to 2400 N/m, 1500 N/m to 2800 N/m, 1500 N/m to 2550 N/m, 1500 N/m to 2400 N/m, 1700 N/m to 2800 N/m, 1700 N/m to 2550 N/m, or 1700 N/m to 2400 N/m. Therefore, volume expansion of the negative electrode side during charging may be better reduced, and the probability of peeling off the organic-inorganic composite layer from a surface of the negative electrode substrate may be reduced, so that the function of the organic-inorganic composite layer may be exerted for a long time, and the cycle life of the battery may be prolonged.

In some embodiments, the elastic modulus of the organic-inorganic composite layer 102 may be 0.1 MPa to 70MPa, optionally 0.5 MPa to 55 MPa, 1 MPa to 55 MPa, 10 MPa to 55 MPa, 15M Pa to 55 MPa, 19 MPa to 55 MPa, 0.5 MPa to 53 MPa, 1 MPa to 53 MPa, 10 MPa to 53 MPa, 15 MPa to 53 MPa, 19 MPa to 53 MPa, 0.5 MPa to 45 MPa, 1 MPa to 45 MPa, 10 MPa to 45 MPa, 15 MPa to 45 MPa, or 19 MPa to 45 MPa. When the elastic modulus of the organic-inorganic composite layer is within the above-described range, the probability of the lithium dendrite penetrating the separator may be reduced, the probability of short circuit of the battery may be reduced, and the reliability of the battery may be improved.

In some embodiments, the elastic deformation of the organic-inorganic composite layer 102 may be 7% to 700%, optionally 9% to 700%, 9% to 600%, 9% to 500%, 9% to 400%, 9% to 310%, 21% to 700%, 21% to 600%, 21% to 500%, 21% to 400%, 21% to 310%, 30% to 700%, 30% to 600%, 30% to 500%, 30% to 400%, 30% to 310%, 50% to 700%, 50% to 600%, 50% to 500%, 50% to 400%, 50% to 310%, 80% to 700%, 80% to 600%, 80% to 500%, 80% to 400%, or 80% to 310%. When the elastic deformation of the organic-inorganic composite layer is within the above-described range, it is beneficial to being compatible with volume expansion of the negative electrode side during charging, and reducing the probability of fracture or cracking of the organic-inorganic composite layer, so that the function of the organic-inorganic composite layer may be exerted for a long time, and the cycle life of the battery may be prolonged.

In some embodiments, the electrolyte solution swelling ratio of the organic-inorganic composite layer 102 at 25°C may be 9% to 60%, optionally 11% to 60%, 11% to 50%, 11% to 38%, 13% to 60%, 13% to 50%, 13% to 38%, 15% to 60%, 15% to 50%, or 15% to 38%. When the electrolyte solution swelling ratio of the organic-inorganic composite layer is within the above-described range, it may promote efficient transfer of ions inside the organic-inorganic composite layer and at an interface with the negative electrode substrate, which is beneficial to improving the cycle performance and the dynamic performance of the battery.

In some embodiments, the ionic conductivity of the organic-inorganic composite layer 102 at 25 °C may be 0.001 mS/cm to 5 mS/cm, and is optionally 0.03 mS/cm to 5 mS/cm, 0.03 mS/cm to 4mS/cm, 0.03 mS/cm to 3.4mS/cm, 0.07 mS/cm to 5 mS/cm, 0.07 mS/cm to 4mS/cm, 0.07 mS/cm to 3.4mS/cm, 0.1 mS/cm to 5 mS/cm, 0.1 mS/cm to 4mS/cm, or 0.1 mS/cm to 3.4mS/cm. When the ionic conductivity of the organic-inorganic composite layer is within the above-described range, it is beneficial to efficient transfer of the ions inside the organic-inorganic composite layer and at the interface with the negative electrode substrate, and is beneficial to improving the cycle performance and the dynamic performance of the battery.

In some embodiments, the thickness of the organic-inorganic composite layer 102 may be 0.005 $\mu$m to 10 $\mu$m, optionally 0.02 $\mu$m to 8 $\mu$m, 0.02 $\mu$m to 5 $\mu$m, 0.02 $\mu$m to 3 $\mu$m, 0.05 $\mu$m to 8 $\mu$m, 0.05 $\mu$m to 5 $\mu$m, 0.05 $\mu$m to 3 $\mu$m, 0.08 $\mu$m to 8 $\mu$m, 0.08 $\mu$m to 5 $\mu$m, 0.08 $\mu$m to 3 $\mu$m, 0.1 $\mu$m to 8 $\mu$m, 0.1 $\mu$m to 5 $\mu$m, or 0.1 $\mu$m to 3 $\mu$m. When the thickness of the organic-inorganic composite layer is within the above-described range, side reactions may be reduced, consumption of the electrolyte solution and the first metal material may be reduced, capacity losses of the battery may be reduced, the battery may have high coulombic efficiency, high energy density, and long cycle life, the deposition behavior of lithium metal may be regulated, the formation of lithium dendrites may be reduced, the probability of the lithium dendrites penetrating the separator may be reduced, the probability of short circuit of the battery may be reduced, and the reliability of the battery may be improved. In addition, the negative electrode plate may have relatively high ionic conductivity and relatively low interface resistance, thereby being beneficial to improving the cycle performance and the dynamic performance of the battery.

The thickness of the organic-inorganic composite layer 102 refers to the thickness of the organic-inorganic composite layer 102 located on one surface of the negative electrode substrate 101.

In some embodiments, the organic-inorganic composite layer 102 includes a first surface close to the negative electrode substrate 101 and a second surface away from the negative electrode substrate 101. The mass content of the first inorganic component in the first surface is denoted as $W_1$, the mass content of the first inorganic component in the second surface is denoted as $W_2$, and $W_1 > W_2$. Therefore, the regulation effect of the organic-inorganic composite layer on the deposition behavior of lithium metal may be enhanced, further reducing the formation of lithium dendrites.

In some embodiments, based on the total weight of the organic-inorganic composite layer 102, the content of the polymer in the organic-inorganic composite layer 102 is denoted as a, the content of the first inorganic component is denoted as b, and a:b may be 1:8 to 8:1, optionally 1:5 to 5:1, more optionally 1:3 to 3:1. When the weight ratio of the polymer to the first inorganic component is within the above-described range, one or a plurality of the elastic modulus, the elastic deformation, the electrolyte solution swelling ratio, or the ionic conductivity of the organic-inorganic composite layer may be adjusted, so that the organic-inorganic composite layer may have high elastic modulus, high elastic deformation, and high ionic conductivity, volume expansion of the negative electrode side during charging may be reduced, the formation of lithium dendrites may be reduced, and the cycle performance of the battery may be improved.

In some embodiments, a may be 8wt% to 80wt%, optionally 9.5wt% to 75wt%, or 14wt% to 71wt%.

In some embodiments, b may be 8wt% to 80wt%, optionally 9.5wt% to 75wt%, or 14wt% to 71wt%.

In some embodiments, the polymer may include one or a plurality of a polymer with high viscosity, a polymer with an ion conduction function, or a polymer able to react with the first metal material.

In some embodiments, the polymer able to react with the first metal material may include at least one functional group selected from -OH, -COOH, -CN, and -SO$_3$H. Therefore, the peel strength between the organic-inorganic composite layer and the negative electrode substrate may be increased, volume expansion of the negative electrode side during charging may be better reduced, and the probability of peeling off the organic-inorganic composite layer from the surface of the negative electrode substrate may be reduced, so that the function of the organic-inorganic composite layer may be exerted for a long time, and the cycle life of the battery may be prolonged.

In some embodiments, the polymer with high viscosity may include one or a plurality of poly(methyl acrylate), polyurethane, natural rubber, polyisoprene, polystyrene, or respective derivatives thereof.

In some embodiments, the polymer with the ion conduction function may include one or a plurality of polyether, polyethylene oxide, polycarbonate, poly(methyl methacrylate), ionomer, or respective derivatives thereof.

In some embodiments, the polymer able to react with the first metal material may include one or a plurality of polyacrylonitrile, polycyanoacrylate, polymethacrylic acid, hydrogenated nitrile rubber, polyvinyl alcohol, or respective derivatives thereof.

The derivatives generally refer to products derived by replacing hydrogen atoms or atomic groups in the polymer with other atoms or atomic groups (for example, may include -OH, -COOH, -CN, or -$SO_3H$).

Certainly, the above-described polymer may further have a plurality of functions at the same time. For example, the polycyanoacrylate may not only react with the first metal material, but also have high viscosity.

In some embodiments, the organic-inorganic composite layer 102 may further include a second inorganic component.

In some embodiments, the second inorganic component may include one or a plurality of a lithium salt or a solid electrolyte. Therefore, the elastic modulus and/or the ionic conductivity of the organic-inorganic composite layer may be adjusted, thereby being beneficial to improving the cycle performance and/or the dynamic performance of the battery.

In some embodiments, based on the total weight of the organic-inorganic composite layer 102, the total content of the second inorganic component in the organic-inorganic composite layer 102 is denoted as c, and c may be greater than 0 and less than or equal to 55wt%, optionally 3wt% to 50wt%, 5wt% to 50wt%, 3wt% to 40wt%, 5wt% to 40wt%, 3wt% to 30wt%, 5wt% to 30wt%, 3wt% to 20wt%, or 5wt% to 20wt%. When the total content of the second inorganic component is within the above-described range, one or a plurality of the elastic modulus, the ionic conductivity, the electrolyte solution swelling ratio, or the elastic deformation of the organic-inorganic composite layer may be adjusted, thereby being beneficial to improving the cycle performance and/or the dynamic performance of the battery.

In some embodiments, the lithium salt may include one or a plurality of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis-trifluoromethanesulfonimide (LiTFSI), lithium dioxalate borate (LiBOB), lithium difluoro-o(oxalato)borate (LiDFOB), lithium difluorodioxalate phosphate (LiDFOP), lithium tetrafluoro(oxalato)phosphate (LiTFOP), lithium difluorophosphate ($LiPO_2F_2$), or lithium trifluoromethanesulfonate (LiTFS).

In some embodiments, the solid electrolyte may include one or a plurality of an oxide-type inorganic solid electrolyte, a sulfide-type inorganic solid electrolyte, or a halide-type inorganic solid electrolyte.

In some embodiments, the oxide-type inorganic solid electrolyte may include one or a plurality of an NASICON-type solid electrolyte, a gamet-type solid electrolyte, a perovskite-type solid electrolyte, or an LISICON-type solid electrolyte.

In some embodiments, the sulfide-type inorganic solid electrolyte may include one or a plurality of a sulfide-type crystalline solid electrolyte or a sulfide glass-type solid electrolyte.

In some embodiments, the solid electrolyte may include one or a plurality of lithium titanium phosphate ($Li_xTi_y(PO_4)_3$, 0<x<2, 0<y<3), lithium aluminum titanium phosphate ($Li_xAl_yTi_z(PO_4)_3$, LATP, 0<x<2, 0<y<1, 0<z<3), lithium aluminum germanium phosphate ($Li_xAl_yGe_z(PO_4)_3$, LAGP, 0<x<2, 0<y<1, 0<z<3), lithium aluminum zirconium phosphate ($Li_xAl_yZr_z(PO_4)_3$, LAZP, 0<x<2, 0<y<1, 0<z<3), lithium aluminum chromium phosphate ($Li_xAl_yCr_z(PO_4)_3$, LACP, 0<x<2, 0<y<1, 0<z<3), $(LiAlTiP)_xO_y$ type glass (0<x<4, 0<y<13), lithium lanthanum titanate ($Li_xLa_yTiO_3$, 0<x<2, 0<y<3), lithium aluminum zirconium oxide ($Li_7La_3Zr_2O_{12}$, LLZO), Lithium thallium oxide ($Li_5La_3Ta_2O_{12}$, LLTA), lithium zinc germanium oxide ($Li_{14}ZnGe_4O_{16}$), sulfur silver germanium ore electrolyte $Li_6PS_5X$ (X includes one or a plurality selected from Cl, Br, or I), $SiS_2$ type glass ($Li_xSi_yS_z$, 0<x<3, 0<y<2, 0<z<4), $P_2S_5$ type glass ($Li_xP_yS_z$, 0<x<3, 0<y<3, 0<z<7), $Li_3PS_4$, $Li_7P_3S_{11}$, $Li_{10}GeP_2S_{12}$, or respective doped compounds thereof. The doped compound is usually a product obtained by doping other elements, such as metal elements, in a compound. The type of the doping element is not particularly limited as long as the subject matter of the present application is not impaired.

In some embodiments, the organic-inorganic composite layer 102 may further include a third inorganic component.

In some embodiments, the third inorganic component may include one or a plurality of a film-forming additive or an inorganic filler. Therefore, the film formation quality of a negative electrode may be improved, and one or a plurality of the elastic modulus, the ionic conductivity, the electrolyte solution swelling ratio, or the elastic deformation of the organic-inorganic composite layer may also be adjusted, thereby being beneficial to improving the cycle performance and/or the dynamic performance of the battery.

In some embodiments, based on the total weight of the organic-inorganic composite layer 102, the total content of the third inorganic component in the organic-inorganic composite layer 102 is denoted as d, and d is greater than 0 and less than or equal to 20wt%.

In some embodiments, the film-forming additive may include one or a plurality of fluoroethylene carbonate, vinylene carbonate, vinylethylene carbonate, ethylene sulfate, propylene sulfite, ethylene sulfite, diethyl sulfite, dimethyl sulfite, butanesultone, or tris(trimethylsilyl)phosphate.

In some embodiments, the inorganic filler may include one or a plurality of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, or barium titanate.

In some embodiments, the volume distribution particle size Dv50 of the first inorganic component is less than or equal to 80 nm, optionally 10 nm to 30 nm. Therefore, the interface impedance of the battery may be reduced, and the cycle performance and/or the dynamic performance of the battery may be improved.

The volume distribution particle size Dv50 is the meaning well known in the art, which represents the particle size at which the cumulative volume distribution percentage of the material reaches 50%, and may be measured by instruments and methods known in the art. For example, the volume distribution particle size may be measured using a laser particle size analyzer with reference to GB/T 19077-2016. The testing instrument may be a Mastersizer Model 3000 laser particle size analyzer from Malvern Instruments Ltd., UK.

In some embodiments, the first substrate layer 1011 may be a lithium plate (foil) or a lithium alloy plate (foil).

The lithium alloy may be an alloy of metallic lithium with other metal elements or non-metal elements. As an example, the other metal elements in the lithium alloy may include one or a plurality of silver, magnesium, aluminum, gold, platinum, zinc, tin, copper, nickel, titanium, gallium, or indium. The non-metallic elements in the lithium alloy may include one or a plurality of boron, carbon, or silicon.

In some embodiments, the first substrate layer 1011 may further include a first negative electrode active material.

In some embodiments, the first negative electrode active material may include a carbon-based material, and optionally includes one or a plurality of graphite or hard carbon.

In some embodiments, the first substrate layer 1011 may optionally further include a binder, to bond the first metal material and the first negative electrode active material together. The type of the binder is not particularly limited in the present application. As an example, the binder may include one or a plurality of styrene butadiene rubber (SBR), acrylic resin (for example, polyacrylic acid PAA, polymethacrylic acid PMAA), polyvinylidene fluoride (PVDF), polyurethane (PU), polyvinylidene fluoride-hexafluoropropylene, polyacrylate, or polyethylene oxidized.

In some embodiments, the negative electrode plate 10 includes a negative electrode substrate 101 and an organic-inorganic composite layer 102 located on at least one surface of the negative electrode substrate 101. The negative electrode substrate 101 includes a first substrate layer 1011 close to the organic-inorganic composite layer 102. The first substrate layer 1011 includes a first metal material. The first metal material includes one or a plurality of elemental lithium or a lithium alloy. The organic-inorganic composite layer 102 includes a polymer, a first inorganic component, and a second inorganic component. The first inorganic component includes one or a plurality of LiI, LiF, $Li_2S$, $Li_3N$, or $Li_3P$. The second inorganic component includes one or a plurality of a lithium salt or a solid electrolyte. The polymer includes one or a plurality of a polymer with high viscosity, a polymer with an ion conduction function, or a polymer able to react with the first metal material. Based on the total weight of the organic-inorganic composite layer 102, the content of the polymer in the organic-inorganic composite layer 102 is denoted as a, the content of the first inorganic component is denoted as b, and a:b is 1:5 to 5:1, optionally 1:3 to 3:1. Based on the total weight of the organic-inorganic composite layer 102, the total content of the second inorganic component in the organic-inorganic composite layer 102 is denoted as c, and c is 5wt% to 50wt%. The peel strength between the organic-inorganic composite layer 102 and the negative electrode substrate 101 is greater than or equal to 500 N/m. This is advantageous for further improving the cycling performance of the battery.

Continuing to refer to FIG. 6, in some embodiments, the negative electrode substrate 101 may include only a first substrate layer 1011. An organic-inorganic composite layer 102 may be located on at least one surface of the negative electrode substrate 101 (or the first substrate layer 1011).

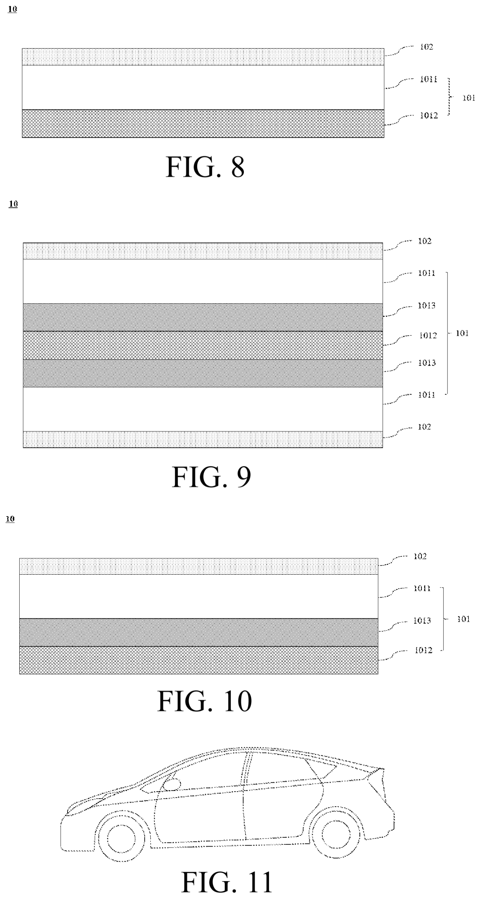

Continuing to refer to FIG. 7 and FIG. 8, in some embodiments, the negative electrode substrate 101 may further include a negative electrode current collector layer 1012 away from the organic-inorganic composite layer 102, and the first substrate layer 1011 is located on at least one surface of the negative electrode current collector layer 1012. The organic-inorganic composite layer 102 is located on a surface of the first substrate layer 1011.

Continuing to refer to FIG. 9 and FIG. 10, in some embodiments, the negative electrode substrate 101 may further include a second negative electrode active material layer 1013 located between the first substrate layer 1011 and the negative electrode current collector layer 1012. The second negative electrode active material layer 1013 includes a second negative electrode active material.

In some embodiments, the second negative electrode active material may include one or a plurality of a carbon-based material, lithium titanate, or a silicon-based material. As an example, the carbon-based material may include one or a plurality of graphite (for example, natural graphite, or artificial graphite), soft carbon, or hard carbon. As an example, the silicon-based material may include one or a plurality of elemental silicon, a silicon oxide, a silicon-carbon composite, a silicon-nitrogen composite, or a silicon alloy.

The second negative electrode active material in the second negative electrode active material layer 1013 may be the same as or different from the first negative electrode active material in the first substrate layer 1011, which is not limited in the embodiments of the present application.

In some embodiments, the second negative electrode active material layer 1013 may further include a conductive agent. The type of the conductive agent is not particularly limited in the present application. As an example, the conductive agent may include one or a plurality of superconducting carbon, conductive graphite, acetylene black, carbon black, ketjen black, carbon dot, carbon nanotube, graphene, or carbon nanofiber.

In some embodiments, the second negative electrode active material layer 1013 may further include a binder. The type of the binder is not particularly limited in the present application. As an example, the binder may include one or a plurality of styrene-butadiene rubber (SBR), aqueous unsaturated resin SR-1B, aqueous acrylic resin (for example, polyacrylic acid (PAA), polymethacrylic acid (PMAA), and sodium polyacrylate (PAAS)), polyacrylamide (PAM), polyvinyl alcohol (PVA), sodium alginate (SA), or carboxymethyl chitosan (CMCS).

In some embodiments, the second negative electrode active material layer 1013 may further include other auxiliary agents. As an example, the other auxiliary agents may include a thickening agent, such as carboxymethylcellulose (CMC) sodium and a PTC thermistor material.

In some embodiments, the thickness of the first substrate layer 1011 may be 1 $\mu$m to 100 $\mu$m, optionally 10 $\mu$m to 50 $\mu$m. The thickness of the first substrate layer 1011 refers to the thickness of the first substrate layer 1011 located on one surface of the negative electrode current collector layer 1012.

In some embodiments, the thickness of the negative electrode current collector layer 1012 may be 0 $\mu$m to 15 $\mu$m, optionally 5 $\mu$m to 12 $\mu$m. When the thickness of the negative electrode current collector layer is 0, it means that the negative electrode substrate does not include the negative electrode current collector layer.

In some embodiments, the thickness of the second negative electrode active material layer 1013 may be 0 $\mu$m to 120 $\mu$m, optionally 20 $\mu$m to 100 $\mu$m. The thickness of the second negative electrode active material layer 1013 refers to the thickness of the second negative electrode active material layer 1013 located on one surface of the negative electrode current collector layer 1012. When the thickness of the second negative electrode active material layer is 0, it means that the negative electrode substrate does not include the second negative electrode active material layer.

In some embodiments, the total thickness of the negative electrode substrate 101 may be 10 $\mu$m to 290 $\mu$m, optionally 20 $\mu$m to 250 $\mu$m. The thickness of the negative electrode substrate refers to the total thickness of the negative electrode substrate composed of the first substrate layer 1011 and the negative electrode current collector layer 1012 and/or the second negative electrode active material layer 1013.

In some embodiments, the negative electrode current collector layer 1012 may include a metal foil, a three-dimensional porous current collector, or a composite current collector.

Examples of the metal foil may include a copper foil, a copper alloy foil, a nickel foil, and a nickel alloy foil.

Examples of the three dimensional porous current collector may include copper mesh, nickel mesh, foamed copper, and foamed nickel.

The composite current collector may include a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

The negative electrode substrate 101 does not exclude other additional functional layers in addition to the first substrate layer 1011, the negative electrode current collector layer 1012, and the second negative electrode active material layer 1013. For example, in some embodiments, the negative electrode substrate 101 may further include a conductive undercoat layer (for example, it may be composed of a conductive agent and a binder) sandwiched between the negative electrode current collector layer 1012 and the second negative electrode active material layer 1013 and disposed on a surface of the negative electrode current collector layer 1012.

The thickness of the organic-inorganic composite layer, having the meaning well known in the art, may be tested using instruments and methods known in the art. For example, six groups of parallel samples may be taken, the thickness of each group of samples at different positions is measured using an optical microscope, at least 20 positions of each group of samples are measured, and an average value of the thicknesses of the six groups of samples is taken as the thickness of the sample.

The elastic modulus of the organic-inorganic composite layer, having the meaning well known in the art, may be tested using instruments and methods known in the art. A test temperature is 25°C. For example, during the test, the organic-inorganic composite layer may be cut into strips with the length $L_0$ of 150 mm and the width of 20 mm, and then subjected to a tensile test using a universal testing machine, where the tensile distance may be 100 mm, and the tensile speed may be 50 mm/min. The elastic modulus is calculated based on a maximum tensile force of the organic-inorganic composite layer. The testing instrument may be an Instron33652 tensile testing machine.

The elastic deformation of the organic-inorganic composite layer, having the meaning well known in the art, may be tested using instruments and methods known in the art. A test temperature is 25°C. For example, the organic-inorganic composite layer may be cut into strips with the length $L_0$ of 150 mm and the width of 20 mm, and then subjected to a tensile test using a universal testing machine, where the tensile speed may be 50mm/min. The elastic deformation of the organic-inorganic composite layer is $(L-L_0)/L_0 \times 100\%$, where the length of the organic-inorganic composite layer when it breaks is L. The testing instrument may be an Instron33652 tensile testing machine.

The electrolyte solution swelling ratio of the organic-inorganic composite layer at 25°C, having the meaning well known in the art, may be tested using instruments or methods known in the art. For example, during the test, the organic-inorganic composite layer may be cut into a 30 mm$\times$30 mm square sample, and the mass is denoted as $m_0$. Then, the sample is immersed in an electrolyte solution for 2h for a swelling experiment. The swollen sample is taken out and the electrolyte solution remaining on the surface of the swollen sample is gently wiped with filter paper, and then the mass of the swollen sample is weighed and denoted as m. The electrolyte solution swelling ratio of the organic-inorganic composite layer at 25°C is $(m-m_0)/m_0 \times 100\%$. The electrolyte solution may be prepared as follows: dimethoxyethane (DME) is used as a solvent, LiFSI is added into the solvent in batches, and the mixture is heated and stirred to dissolve LiFSI, thereby preparing an electrolyte solution with the concentration of 1mol/L.

The ionic conductivity of the organic-inorganic composite layer at 25°C, having the meaning well known in the art, may be tested using instruments or methods known in the art. For example, during the test, an organic-inorganic composite layer plate may be punched into a wafer with the diameter of 16 mm. The organic-inorganic composite layer wafer is immersed in the electrolyte solution for 1h, and then taken out. The electrolyte solution remaining on the surface is gently wiped with filter paper. The ionic conductivity of the organic-inorganic composite layer is calculated using the formula $\sigma=d/(R\times A)$. R is the thickness of the sample, which may be measured using a micrometer. A is the area of the sample. R is the impedance of the sample, which may be obtained by assembling the sample into a symmetrical battery (having an electrode that may be a stainless steel electrode) and then testing the same using an electrochemical workstation, where the test frequency may be $10^{-6}$ to $10^{-1}$ Hz, and the voltage amplitude may be 5 mV. The intersection of a graph and a horizontal axis is taken as the impedance R of the sample. The electrolyte solution may be prepared as follows: dimethoxyethane (DME) is used as a solvent, LiFSI is added into the solvent in batches, and the mixture is heated and stirred to dissolve LiFSI, thereby preparing an electrolyte solution with the concentration of 1mol/L. The electrochemical workstation may be a CHI660C electrochemical workstation from Shanghai Chenhua.

The peel strength between the organic-inorganic composite layer and the negative electrode substrate, having the meaning well known in the art, may be tested using instruments and methods known in the art. For example, during the test, the negative electrode plate (for example, when the negative electrode plate is provided with a double-sided protective layer, the negative electrode plate may be processed to have a single-sided protective layer using a scraper) may be cut into a test sample of 150 mm$\times$20 mm. A flat steel plate is taken, and a double-sided adhesive (the length is slightly greater than that of the test sample, and the width may be the same as the test sample) is attached to the center of the steel plate and flattened with a force to closely attach the double-sided adhesive to the center of the steel plate. A negative electrode substrate side of the test sample is flatly attached and fixed to the double-sided adhesive, and an organic-inorganic composite layer side of the sample is attached to an adhesive tape (the peel strength between the organic-inorganic composite layer and the adhesive tape is greater than the peel strength between the organic-inorganic composite layer and the negative electrode substrate). After the sample is prepared, calibration and zeroing are first performed, a test width is set, and a 180° peeling test is performed using a tensile tester (a peel surface is consistent with a force line of the tester), where the peel speed is 50m/min, and the peel distance is half of the sample size (for example, 75 mm), so that a peel strength curve may be obtained. The peel strength between the organic-inorganic composite layer and the negative electrode substrate is calculated based on the value of a stable section of the peel strength curve. The testing instrument may be an Instron33652 tensile testing machine.

To ensure the accuracy of a test result, in the above-described test, each sample is tested at least three times, and the average value is taken as the test result.

In the above-described test, the organic-inorganic composite layer may be obtained from the negative electrode plate. For example, the first substrate layer may be dissolved by a solvent (for example, ethanol) to obtain the organic-inorganic composite layer.

The negative electrode plate may be sampled and tested during preparation, and may alternatively be sampled from the prepared battery cell and tested. For example, the battery cell may be discharged (for safety, the battery cell is generally in a fully discharged state). The battery cell is disassembled and then the negative electrode plate is taken out, and the negative electrode plate is soaked in dimethyl carbonate for a certain time (for example, 2h to 10h). Then, the negative electrode plate is taken out and dried at a certain temperature and time (for example, 60°C, more than 4h), and the negative electrode plate is taken out after drying.

[Preparation method]

The embodiments of the present application further provide a method for preparing a negative electrode plate.
The preparation method includes the following steps of: providing a negative electrode substrate, where the negative electrode substrate includes a first substrate layer, the first substrate layer includes a first metal material, and the first metal material includes one or a plurality of elemental lithium or a lithium alloy; providing a first reaction component, where the first reaction component includes one or a plurality of $I_2$, S, $N_2$, or P; and carrying out a contact reaction between the first reaction component and the first metal material in the first substrate layer to form a first inorganic component in situ on a surface of the first substrate layer, where the first inorganic component includes one or a plurality of LiI, LiF, $Li_2S$, $Li_3N$, or $Li_3P$; providing a coating solution, where the coating solution includes a polymer and/or a monomer used for forming the polymer; coating the surface of the first substrate layer with the coating solution, forming an organic-inorganic composite layer after a reaction to obtain a negative electrode plate, where the reaction includes at least one of a reaction between the polymer and the first metal material and/or the first inorganic component and an in-situ polymerization reaction of the monomer.

In the preparation method provided in the embodiments of the present application, the organic-inorganic composite layer is formed by the in-situ reaction, so that the peel strength between the organic-inorganic composite layer and the negative electrode substrate can be improved, and the organic-inorganic composite layer is tightly bonded to the negative electrode substrate, reducing volume expansion of a negative electrode side during charging, and reducing the probability of peeling off the organic-inorganic composite layer from the surface of the negative electrode substrate. Therefore, the function of the organic-inorganic composite layer may be exerted for a long time, and the cycle life of the battery may be prolonged.

The first inorganic component is obtained by the in-situ contact reaction of the first reaction component and the first metal material, so that first inorganic component particles may be more nano-sized, compact and uniform, an ion field may be better uniformized, and a deposition behavior of lithium metal may be regulated, thereby reducing the formation of lithium dendrites, reducing volume expansion of a negative electrode side during charging, and reducing the probability of fracture or cracking of the organic-inorganic composite layer due to the growth of lithium dendrites or interface displacement. The probability of forming lithium dendrites with sharp shapes during charging and discharging may also be reduced, and the probability of lithium dendrites penetrating the separator may be reduced, thereby reducing the probability of short circuit of the battery, and improving the reliability of the battery. In addition, a swelling behavior of the organic-inorganic composite layer in an electrolyte solution may be adjusted, the ionic conductivity of the organic-inorganic composite layer may be improved, the interface impedance of the battery may be reduced, and efficient transfer of ions inside the organic-inorganic composite layer and at an interface with the negative electrode substrate may be promoted.

The polymer may be obtained by the in-situ polymerization reaction of the monomer or by the reaction between the polymer and the first metal material and/or the first inorganic component. The polymer obtained may effectively fill gaps left by the first inorganic component particles on the surface of the first substrate layer, reducing contact between the electrolyte solution and the first metal material in the first substrate layer, reduce side reactions, and reduce consumption of the electrolyte solution and the first metal material. The first inorganic component particles may be uniformly dispersed in the organic-inorganic composite layer, so that the organic-inorganic composite layer is more compact and uniform, and the problems of easy agglomeration of nano-inorganic particles and poor dispersion of the nano-inorganic particles in an organic phase (such as the polymer binder) in a conventional coating method may be avoided.

Therefore, the first inorganic particles and the polymer in the organic-inorganic composite layer formed by the preparation method provided in the embodiments of the present application may be uniformly compounded, and the formed organic-inorganic composite layer is more compact and uniform, which may reduce the formation of lithium dendrites, reduce contact between the electrolyte solution and the first metal material in the negative electrode substrate, reduce side reactions, and reduce consumption of the electrolyte solution and the first metal material, thereby reducing capacity losses of the battery. Volume expansion of the negative electrode side during charging may also be reduced, so that the battery has high coulombic efficiency, high energy density, and long cycle life. Meanwhile, the elastic modulus of the organic-inorganic composite layer is improved, thereby reducing the probability of lithium dendrites penetrating the separator, reducing the probability of short circuit of the battery, and improving the reliability of the battery.

In some embodiments, the peel strength between the organic-inorganic composite layer generated in situ and the negative electrode substrate is greater than or equal to 500N/m, for example, may be 600 N/m to 3200 N/m, 800 N/m to 2800 N/m, 800 N/m to 2550 N/m, 800 N/m to 2400 N/m, 1200 N/m to 2800 N/m, 1200 N/m to 2550 N/m, 1200 N/m to 2400 N/m, 1500 N/m to 2800 N/m, 1500 N/m to 2550 N/m, 1500 N/m to 2400 N/m, 1700 N/m to 2800 N/m, 1700 N/m to 2550 N/m, and 1700 N/m to 2400 N/m.

In some embodiments, a manner for carrying out the contact reaction between the first reaction component and the first metal material in the first substrate layer may involve evaporation, optionally, vacuum evaporation or physical evaporation.

In some embodiments, the first reaction component is in the form of vapor.

In some embodiments, the method includes the following steps of: providing a negative electrode substrate, where the negative electrode substrate includes a first substrate layer, the first substrate layer includes a first metal material, and the first metal material includes one or a plurality of elemental lithium or a lithium alloy; providing vapor, where the vapor includes one or a plurality of $I_2$, S, $N_2$, or P; and carrying out a contact reaction between the vapor and the first metal material in the first substrate layer to form a first inorganic component in situ on a surface of the first substrate layer, where the first inorganic component includes one or a plurality of LiI, LiF, $Li_2S$, $Li_3N$, or $Li_3P$; providing a coating solution, where the coating solution includes a polymer and/or a monomer used for forming the polymer; coating the surface of the first substrate layer with the coating solution, forming an organic-inorganic composite layer after a reaction to obtain a negative electrode plate, where the reaction includes at least one of a reaction between the polymer and the first metal material and/or the first inorganic component and an in-situ polymerization reaction of the monomer.

The first inorganic component is obtained by an in-situ reaction between the vapor and the first metal material, so that the first inorganic component particles may be more nano-sized, and compact and uniform.

In some embodiments, the reaction temperature of the contact reaction between the first reaction component and the first metal material in the first substrate layer may be 30°C to 200°C, optionally 50°C to 180°C.

In some embodiments, the reaction time of the contact reaction between the first reaction component and the first metal material in the first substrate layer may be less than or equal to 5h, optionally less than or equal to 2h.

By adjusting the reaction temperature and/or the reaction time during reaction, the content of the first inorganic component in the organic-inorganic composite layer may be adjusted, and the thickness of the organic-inorganic composite layer may also be adjusted.

In some embodiments, the coating solution may include a polymer. The polymer includes a polymer able to react with the first metal material. For example, the polymer may include at least one functional group selected from -OH, -COOH, -CN, or $-SO_3H$. In this way, the polymer may be chemically bonded to the negative electrode substrate, so that the organic-inorganic composite layer may be closely combined with the negative electrode substrate, volume expansion of a negative electrode side during charging may be reduced, the probability of peeling off the organic-inorganic composite layer from a surface of the negative electrode substrate may be reduced. Therefore, the function of the organic-inorganic composite layer may be exerted for a long time, and the cycle life of the battery may be prolonged.

In some embodiments, the coating solution may include a monomer used for forming a polymer. For example, the surface of the negative electrode substrate having the first inorganic component may be coated with the coating solution, and then the monomer is subjected to an in-situ polymerization reaction under the action of at least one of an initiator, heat, light, and a radiation source to form the organic-inorganic composite layer. The polymer in the organic-inorganic composite layer is obtained by an in-situ polymerization reaction of the monomer, so that the organic-inorganic composite layer may be closely combined with the negative electrode substrate, volume expansion of the negative electrode side during charging may be reduced, and the probability of peeling off the organic-inorganic composite layer from the surface of the negative electrode substrate may be reduced. Therefore, the function of the organic-inorganic composite layer may be exerted for a long time, and the cycle life of the battery may be prolonged.

In some embodiments, the monomer used for forming the polymer may further include at least one functional group selected from -OH, -COOH, -CN, or $-SO_3H$. In this way, the formed polymer may be chemically bonded to the negative electrode substrate, so that the organic-inorganic composite layer may be more closely combined with the negative electrode substrate, volume expansion of the negative electrode side during charging may be reduced, the probability of peeling off the organic-inorganic composite layer from the surface of the negative electrode substrate may be reduced. Therefore, the function of the organic-inorganic composite layer may be exerted for a long time, and the cycle life of the battery may be prolonged.

In some embodiments, the coating solution may further include an initiator. As an example, the initiator may include an initiator used for radical polymerization, for example, one or a plurality of organic peroxides (such as benzoyl peroxide, lauroyl peroxide, cumene hydroperoxide, tert-butyl hydroperoxide, di-tert-butyl peroxide, dicumyl peroxide, tert-butyl peroxybenzoate, tert-butyl peroxypivalate, methyl ethyl ketone peroxide, cyclohexanone peroxide, diisopropyl peroxydicarbonate, and dicyclohexyl peroxydicarbonate), inorganic peroxides (such as potassium persulfate, sodium persulfate, and ammonium persulfate), or azo compounds (such as azobisisobutyronitrile and azobisisoheptonitrile), and may further include a photoinitiator, such as one or a plurality of benzophenone, 1-hydroxycyclohexyl phenyl ketone, 2-methyl-1-(4-methylthiophenyl)-2-morpholinyl-1-propanone, triphenylphosphine oxide derivatives, and may further include an initiator (or catalyst) for ionic polymerization, such as one or a plurality of lithium metal, $Li_2S$, metal alkyl compounds (such as triethylaluminum), metal alkoxy compounds, alkali metal amino compounds, tertiary amines, or stannous octoate. Those skilled in the art can make a selection according to the type of the monomer and a polymerization manner.

Certainly, in some embodiments, the coating solution may not use an initiator, and those skilled in the art may adjust whether to use the initiator according to actual circumstances.

In some embodiments, the first inorganic component and/or the first metal material may play a role of a catalyst for polymerization or an initiator to promote polymerization of the monomer.

A heating manner may be the manner well known in the art, such as oven heating, which is not limited in the embodiments of the present application, and may be selected by those skilled in the art according to actual circumstances.

In some embodiments, the reaction temperature of the in-situ polymerization reaction of the monomer may be 25°C to 120°C, optionally 30°C to 100°C. Those skilled in the art may make a selection according to actual circumstances.

In some embodiments, the reaction time of the in-situ polymerization reaction of the monomer may be less than or equal to 24h, optionally less than or equal to 10h, more optionally less than or equal to 8h. Those skilled in the art may make a selection according to actual circumstances.

The light may be ultraviolet light. The radiation source may include $\alpha$ rays, $\beta$ rays, $\gamma$ rays, x rays, electron beams, or the like, which is not limited in the embodiments of the present application and may be selected by those skilled in the art according to actual circumstances.

In some embodiments, the coating solution may further include one or a plurality of a lithium salt or a solid electrolyte. When the formed organic-inorganic composite layer contains the above-described component, the swelling behavior of the organic-inorganic composite layer in the electrolyte solution may be adjusted, so that the swollen organic-inorganic composite layer has relatively high ionic conductivity, and an assembled battery cell has smaller interface impedance, thereby being beneficial to improving the cycle performance and the dynamic performance of the battery.

In some embodiments, the coating solution may further include one or a plurality of a film-forming additive or an inorganic filler. Therefore, the film formation quality of a negative electrode may be improved, and one or a plurality of the elastic modulus, the ionic conductivity, the electrolyte solution swelling ratio, or the elastic deformation of the organic-inorganic composite layer may also be adjusted, thereby being beneficial to improving the cycle performance and/or the dynamic performance of the battery.

In some embodiments, the formed polymer may have a cross-linked network structure. Therefore, the organic-inorganic composite layer may have suitable electrolyte solution swelling ratio, thereby promoting efficient transfer of the ions inside the organic-inorganic composite layer and at the interface with the negative electrode substrate, which is beneficial to improving the cycle performance and the dynamic performance of the battery.

In some embodiments, a solvent of the coating solution may include one or a plurality of dimethoxyethane (DME), tetrahydrofuran (THF), toluene, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), dimethoxymethane (DMM), diglyme (DG), or tetraethylene glycol dimethyl ether, which is not limited in the embodiments of the present application.

In some embodiments, a coating manner for the coating solution may involve scraping, spraying, spin coating, vapor deposition, or the like, which is not limited in the embodiments of the present application.

The preparation method provided by the embodiments of the present application may prepare the negative electrode plate described above in the present application, and other parameters of the negative electrode plate may refer to the negative electrode plate described above in the present application, which are no longer repeated here. During preparation, unless otherwise specified, instruments and reagents used are commercially available.

[Positive electrode plate]

In some embodiments, the positive electrode plate may include a positive electrode current collector and a positive electrode film layer disposed on at least one surface of the positive current collector. The positive electrode film layer may include a positive electrode active material. For example, the positive electrode current collector has two surfaces opposite in its thickness direction, and the positive electrode film layer is provided on either one or both of the two opposite surfaces of the positive electrode current collector.

The type of the positive electrode active material may be selected according to the type of a battery cell, and is not limited in the embodiments of the present application.

For example, when the battery cell is a lithium metal battery cell, the positive electrode active material may include, but is not limited to, one or a plurality of a lithium transition metal oxide, a lithium-containing phosphate, or respective modifying compounds thereof. Examples of the lithium transition metal oxide may include, but are not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphates may include, but are not limited to, one or more of lithium iron phosphate, a composite of lithium iron phosphate and carbon, lithium manganese phosphate, a composite of lithium manganese phosphate and carbon, lithium ferric manganese phosphate, a composite of lithium ferric manganese phosphate and carbon, and respective modified compounds thereof. In some embodiments, to further increase energy density of the battery cell, the positive electrode active material may include one or a plurality of a lithium transition metal oxide having a general formula of $Li_aNi_bCo_cM_dO_eA_f$, or a modified compound thereof. $0.8 \leqq A \leqq 1.2$, $0.5 \leqq b < 1$, $0 < c < 1$, $0 < d < 1$, $1 \leqq e \leqq 2$, and $0 \leqq f \leqq 1$, where M includes one or a plurality of Mn, Al, Zr, Zn, Cu, Cr, Mg, Fe, V, Ti, or B, and A includes one or a plurality of N, F, S, or Cl.

As an example, the positive electrode active material may comprise $LiCoO_2$, $LiNiO_2$, $LiMnO_2$, $LiMn_2O_4$, $LiNi_{1/3}Co_{1/3}Mn_{1/3}O_2$ (abbreviated as NCM333), $LiNi_{0.5}Co_{0.2}Mn_{0.3}O_2$ (abbreviated as NCM523), $LiNi_{0.5}Co_{0.25}Mn_{0.25}O_2$ (abbreviated as NCM211), $LiNi_{0.6}Co_{0.2}Mn_{0.2}O_2$ (abbreviated as NCM622), $LiNi_{0.8}Co_{0.1}Mn_{0.1}O_2$ (abbreviated as NCM811), $LiNi_{0.96}Co_{0.02}Mn_{0.02}O_2$ (abbreviated as Ni96), $LiNi_{0.85}Co_{0.15}Al_{0.05}O_2$, $LiFePO_4$, and $LiMnPO_4$.

The modified compound of each of the above positive electrode active materials may be a compound of the positive electrode active material subjected to doping modification and/or surface coating modification.

When the battery cell is a lithium-sulfur battery cell, the positive electrode active material may include, but is not limited to, one or a plurality of elemental sulfur, a sulfur-carbon composite, a sulfur-conductive polymer composite, or a sulfur-metal oxide composite.

In some embodiments, the positive electrode film layer optionally further includes a positive electrode conductive agent. The type of the positive electrode conductive agent is not particularly limited in the present application, and as an example, includes one or more of superconducting carbon, conductive graphite, acetylene black, carbon black, ketjen black, carbon dot, carbon nanotube, graphene, and carbon nanofiber.

In some embodiments, the positive electrode film layer optionally further includes a positive electrode binder. The type of the positive electrode binder is not particularly limited in the present application. As an example, the positive electrode binder may include one or a plurality of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin.

In some embodiments, the positive electrode current collector may be metal foil or a composite current collector. As an example of the metal foil, aluminum foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer may be formed by applying a positive electrode slurry to a positive current collector, and then drying, and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto.

[Electrolyte]

The electrolyte functions to conduct ions between the positive electrode plate and the negative electrode plate. The type of the electrolyte is not specifically limited in the present application, and may be selected according to a requirement. For example, the electrolyte may include one or a plurality of a solid electrolyte or a liquid electrolyte (namely, an electrolyte solution).

In some embodiments, the electrolyte may be an electrolyte solution. The electrolyte solution may include an electrolyte salt and a solvent.

For example, the electrolyte salt may include one or a plurality of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl) imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluorodioxalate phosphate (LiDFOP), or lithium tetrafluorooxalate phosphate (LiTFOP).

The type of the solvent is not specifically limited and may be selected according to actual requirements.

In some embodiments, the solvent may include one or a plurality of an ester solvent (for example, carbonate, carboxylate, or sulfate), an ether solvent (for example, ether, alcohol ether, or fluoroether), or a sulfone solvent.

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), ethyl sulfonyl ethane (ESE), dimethoxymethane (DMM), diglyme (DG), dimethoxyethane (DME), or tetraethylene glycol dimethyl ether.

In some embodiments, the electrolyte solution optionally further includes an additive. For example, the additive may include a negative electrode film-forming additive or a positive electrode film-forming additive, and may further include an additive capable of improving specific performance of a battery, for example, an additive for improving overcharge performance, an additive for improving high-temperature performance, or an additive for improving low-temperature power performance.

In some embodiments, the concentration of the electrolytic salt may be 0.5 mol/L to 4 mol/L.

[Separator]

In some embodiments, the battery cell further includes a separator. The separator may be disposed between the positive electrode plate and the negative electrode plate, and primarily functions to prevent internal short circuit. The type of the separator is not particularly limited, and any well-known film with a porous structure and having good chemical stability and mechanical stability may be selected.

In some embodiments, a material of the separator may include one or a plurality of glass fiber, non-woven fabric, polyethylene, polypropylene, polyvinylidene fluoride, or polyimide. The separator may be a single-layer film or a multilayer composite film. When the separator is a multilayer composite thin film, materials of all the layers are the same or different.

In some embodiments, charging current density of the battery cell may be 0.5 mA/cm$^2$ to 12 mA/cm$^2$, optionally 0.8 mA/cm$^2$ to 10 mA/cm$^2$, or 1 mA/cm$^2$ to 6 mA/cm$^2$. The negative electrode plate provided in the embodiments of the present application may enable the battery cell to withstand a larger charging current.

## Electric device

The embodiments of the present application further provide an electric device including the battery provided in the embodiments of the present application. The battery may be used as a power supply for the electric device, or as an energy storage unit for the electric device. The electric device may include, but is not limited to, a mobile apparatus (e.g., a cell phone, a tablet computer, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

For the electric device, the specific type of the battery may be selected according to use requirements. For example, it may be a battery cell, a battery module, or a battery pack.

FIG. 11 is a schematic diagram of an electric device as an example. The electric device is a pure electric vehicle, a hybrid electric vehicle, a plug-in hybrid electric vehicle, or the like. To satisfy requirements for high power and high energy density of the electric device, a battery pack or a battery module may be used as a power supply.

As another example, the electric device may be a cell phone, a tablet computer, a notebook computer, or the like. The electric device is generally required to be light and thin, and may use a battery cell as a power supply.

## Examples

The following examples describe the disclosure of the present application more specifically. These examples are used only for illustration, since various modifications and changes made within the scope of the disclosure of the present application are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Example 1

(1) Preparation of negative electrode plate

A lithium strip with the thickness of 20 $\mu$m was pressed and attached to a copper current collector with the thickness of 10 $\mu$m to obtain a negative electrode substrate. A monomer solution was used as a coating solution, and was prepared in the following proportions: 10.54g butyl cyanoacrylate, 2.79g lithium bis(fluorosulfonyl)imide (LiFSI), and 12.93g dimethoxyethane (DME). The thickness of an obtained organic-inorganic composite layer may be adjusted by adjusting the coating thickness of the monomer solution.

The negative electrode substrate was placed in a sublimation iodine vapor atmosphere at 70°C for 60s, and then a surface of the negative electrode substrate was coated with a layer of the monomer solution by scraping. Then, the negative electrode substrate coated with the monomer solution was placed horizontally at 25°C for 2h, and then transferred to a vacuum oven at 60°C for further drying for 5h, to allow the monomer to fully polymerize, thereby obtaining a negative electrode plate having the organic-inorganic composite layer. The organic-inorganic composite layer includes polybutylcyanoacrylate, LiI and LiFSI, the content of each component is shown in Table 1. The thickness of the organic-inorganic composite layer is 0.1 $\mu$m.

(2) Preparation of positive electrode plate

A positive electrode active material NCM811, a conductive agent acetylene black, and a binder PVDF were mixed in the mass ratio of 98:1:1, the mixture was added to a solvent NMP and stirred until the system was uniform to obtain a positive electrode slurry with the solid content of 70%. A surface of a positive current collector aluminum foil was uniformly coated with the positive electrode slurry, after drying in the air, the aluminum foil was transferred to an oven for further drying, and then a positive electrode plate is obtained.

(3) Preparation of electrolyte solution

Dimethoxyethane (DME) was used as a solvent, then LiFSI was added to the solvent in batches, and the mixture was heated and stirred to dissolve LiFSI, to prepare an electrolyte solution with the concentration of 1mol/L.

(4) Preparation of separator

A porous polyethylene film was used as a separator.

(5) Preparation of battery cell

A positive electrode plate, a separator, and a negative electrode plate were sequentially stacked and wound to obtain an electrode assembly. The electrode assembly was placed in an outer package, dried and then injected with an electrolyte solution, and subjected to procedures such as vacuum sealing, standing, formation, and shaping to obtain a battery cell.

## Example 2

A preparation method for a battery cell is similar to that of Example 1, except for a preparation process for a negative electrode plate.

A lithium strip with the thickness of 20 $\mu$m was pressed and attached to a copper current collector with the thickness of 10 $\mu$m to obtain a negative electrode substrate. A polymer solution was used as a coating solution, and was prepared in the following proportions: 10.31g hydrogenated nitrile butadiene rubber, 2.73g lithium difluoro(oxalato)borate (LiDFOB), and 16.8g tetrahydrofuran (THF). The thickness of an obtained organic-inorganic composite layer may be adjusted by adjusting the coating thickness of the polymer solution.

The negative electrode substrate was placed in a sublimed sulfur vapor atmosphere at 120°C for 120s, and then a surface of the negative electrode substrate was coated with a layer of the polymer solution by scraping. Then, the negative electrode substrate coated with the polymer solution was placed horizontally at 25°C for 30min, and then transferred to a vacuum oven at 70°C for further drying for 4h, thereby obtaining a negative electrode plate having the organic-inorganic composite layer. The organic-inorganic composite layer includes hydrogenated nitrile rubber, $Li_2 S$ and LiDFOB, and the content of each component is shown in Table 1. The thickness of the organic-inorganic composite layer is 0.1 $\mu$m.

## Example 3

A preparation method for a battery cell is similar to that of Example 1, except for a preparation process for a negative electrode plate.

A lithium strip with the thickness of 50 $\mu$m was used as a negative electrode substrate. A monomer solution was used as a coating solution, and was prepared in the following proportions: 10.64g isoprene, 0.21g azobisisobutyronitrile (AIBN), 2.81g lithium bis(oxalato)borate (LiBOB), 6.33g toluene, and 6.30g dimethoxyethane (DME). The thickness of an obtained organic-inorganic composite layer may be adjusted by adjusting the coating thickness of the monomer solution.

The negative electrode substrate was placed in a nitrogen atmosphere at 100°C for 120s, and then a surface of the negative electrode substrate was coated with a layer of the monomer solution by scraping. Then, the negative electrode substrate coated with the monomer solution was cured in a vacuum oven at 65°C for 5h, thereby obtaining a negative electrode plate having the organic-inorganic composite layer. The organic-inorganic composite layer includes polyisoprene, $Li_3 N$ and LiBOB, and the content of each component is shown in Table 1. The thickness of the organic-inorganic composite layer is 0.1 $\mu$m.

## Example 4

A preparation method for a battery cell is similar to that of Example 1, except for a preparation process for a negative electrode plate.

A lithium strip with the thickness of 50 $\mu$m was used as a negative electrode substrate. The monomer solution was used as a coating solution, and was prepared in the following proportions: 11.74g styrene, 0.21g benzophenone, 3.10g lithium bis(trifluoromethanesulfonyl)imide (LiTFSI), and 9.60g tetrahydrofuran (THF). The thickness of an obtained organic-inorganic composite layer may be adjusted by adjusting the coating thickness of the monomer solution.

The negative electrode substrate was placed on the surface of black phosphorus powder at 180°C for 30 min, and then a surface of the negative electrode substrate was coated with a layer of the monomer solution by scraping. Then, the negative electrode substrate coated with the monomer solution was placed horizontally and irradiated under a 50w ultraviolet lamp for 40s, thereby obtaining a negative electrode plate having the organic-inorganic composite layer. The organic-inorganic composite layer includes polystyrene, $Li_3P$ and LiTFSI, and the content of each component is shown in Table 1. The thickness of the organic-inorganic composite layer is 0.1 $\mu$m.

**Example 5**

A preparation method for a battery cell is similar to that of Example 1, except for a preparation process for a negative electrode plate.

A lithium strip with the thickness of 20 $\mu$m was pressed and attached to a copper current collector with the thickness of 10 $\mu$m to obtain a negative electrode substrate. The monomer solution was used as a coating solution, and was prepared in the following proportions: 10.74g trimethylene carbonate, 0.21g stannous octoate, 2.84g lithium bis(fluorosulfonyl)imide (LiFSI), and 13.48g ethyl methyl carbonate (EMC). The thickness of an obtained organic-inorganic composite layer may be adjusted by adjusting the coating thickness of the monomer solution.

The negative electrode substrate was placed in a sublimation iodine vapor atmosphere at 70°C for 60s, and then a surface of the negative electrode substrate was coated with a layer of the monomer solution by scraping. Then, the negative electrode substrate coated with the monomer solution was cured in a vacuum oven at 100°C for 5h, thereby obtaining a negative electrode plate having an organic-inorganic composite layer. The organic-inorganic composite layer includes polytrimethylene carbonate, LiI and LiFSI, and the content of each component is shown in Table 1. The thickness of the organic-inorganic composite layer is 0.1 $\mu$m.

**Example 6**

A preparation method for a battery cell is similar to that of Example 1, except for a preparation process for a negative electrode plate.

A lithium magnesium alloy with the thickness of 20 $\mu$m was pressed and attached to a copper current collector with the thickness of 10 $\mu$m to obtain a negative electrode substrate. The monomer solution was used as a coating solution, and was prepared in the following proportions: 9.61g propylene oxide, 0.19g triethylaluminum, 2.54g lithium tetrafluor-oborate ($LiBF_4$), and 23.44g dimethoxyethane (DME). The thickness of an obtained organic-inorganic composite layer may be adjusted by adjusting the coating thickness of the monomer solution.

The negative electrode substrate was placed in a sublimed sulfur vapor atmosphere at 120°C for 120s, and then a surface of the negative electrode substrate was coated with a layer of the monomer solution by scraping. Then, the negative electrode substrate coated with the monomer solution was placed in a vacuum oven at 80°C and cured for 4h, thereby obtaining a negative electrode plate having the organic-inorganic composite layer. The organic-inorganic composite layer includes polypropylene oxide, $Li_2S$ and $LiBF_4$, and the content of each component is shown in Table 1. The thickness of the organic-inorganic composite layer is 0.1 $\mu$m.

**Examples 7-15**

A preparation method for a battery cell is similar to that of Example 1, except for the composition of an organic-inorganic composite layer, which are described in detail in table 1. The organic-inorganic composite layer of Examples 7-15 may be prepared by adjusting the contact time of a negative electrode substrate and iodine vapor, the composition of a monomer solution, and the coating thickness of the monomer solution.

**Examples 16-21**

A preparation method for a battery cell is similar to that of Example 1, except for the thickness of an organic-inorganic composite layer, which are described in detail in table 1. The organic-inorganic composite layer of Examples 16-21 may be prepared by adjusting the contact time of a negative electrode substrate and iodine vapor, the composition of a monomer solution, and the coating thickness of the monomer solution.

**Comparative example 1**

A preparation method for a battery cell is similar to that of Example 1, except that a negative electrode plate is not provided with an organic-inorganic composite layer.

**Comparative example 2**

A preparation method for a battery cell is similar to that of Example 1, except for a preparation process for a negative electrode plate.

A lithium strip with the thickness of 20 $\mu$m was pressed and attached to a copper current collector with the thickness of 10 $\mu$m to obtain a negative electrode substrate. The negative electrode substrate was placed in a sublimated iodine vapor atmosphere at 70°C for 60s, thereby obtaining a negative electrode plate having an inorganic coating.

**Comparative example 3**

A preparation method for a battery cell is similar to that of Example 1, except for a preparation process for a negative electrode plate.

A lithium strip with the thickness of 20 $\mu$m was pressed and attached to a copper current collector with the thickness of 10 $\mu$m to obtain a negative electrode substrate. Polybutylcyanoacrylate and lithium bis(fluorosulfonyl)imide (in the mass ratio of 85:15) were added to dimethoxyethane to prepare a solution, and then a negative electrode substrate was coated with the solution and dried, thereby obtaining a negative electrode plate having an organic coating.

**Comparative example 4**

A preparation method for a battery cell is similar to that of Example 1, except for a preparation process for a negative electrode plate.

A lithium strip with the thickness of 20 $\mu$m was pressed and attached to a copper current collector with the thickness of 10 $\mu$m to obtain a negative electrode substrate. Polybutylcyanoacrylate, LiI, and lithium bis(fluorosulfonyl) imide (in the mass ratio of 56.7:28.3:15) were added to dimethoxyethane to prepare a solution, and then a negative electrode substrate was coated with the solution and dried, thereby obtaining a negative electrode plate having an organic-inorganic composite layer.

**Test Section**

The elastic modulus, the elastic deformation, the electrolyte solution swelling ratio at 25°C, and the ionic conductivity at 25°C of an organic-inorganic composite layer, as well as the peel strength between the organic-inorganic composite layer and a negative electrode substrate were tested according to the methods described above.

(1) Cycling performance test

A test temperature is 25°C. A prepared battery cell was charged to 4.25 V at a constant charging current shown in Table 1, and then discharged to 3.0 V at a constant current of 0.33 C, thereby obtaining a first cycle specific discharge capacity, which was denoted as $Cd_1$. Charge and discharge were repeated for 50 cycles in the above-described manner, and a discharge specific capacity after 50 cycles of the battery cell was denoted as $Cd_{50}$. Capacity retention ratio of battery cell after 50 cycles (%)=discharge specific capacity after 50 cycles ($Cd_{50}$)/first cycle discharge specific capacity ($Cd_1$)$\times$100%.

(2) Lithium precipitation test

After the above-described battery cell after 50 cycles was adjusted to a fully discharged state, the battery cell was disassembled to obtain a negative electrode plate, and lithium precipitation on a surface of the negative electrode plate was observed under an optical microscope. Results are shown in Table 1. Minor means that the area of lithium dendrites observed under an optical microscope is less than 1/4 of the area of the negative electrode plate. Moderate means that the area of lithium dendrites observed under an optical microscope is 1/4 to 2/3 of the area of the negative electrode plate. Severe means that the area of lithium dendrites observed under an optical microscope is greater than 2/3 of the area of the negative electrode plate.

(3) Thickness expansion test of negative electrode plate

A test temperature is 25°C. The thickness of a negative electrode plate after rolling was measured using an optical microscope and denoted as $d_1$. After the above-described battery cell after 50 cycles was adjusted to a fully discharged state, the battery cell was disassembled to obtain the negative electrode plate, and the thickness of the negative electrode plate was measured again using the optical microscope and denoted as $d_2$.

$$\text{Thickness expansion ratio of negative electrode plate (\%)}=(d_2-d_1)/d_1\times100\%.$$

Test results are shown in Table 1.

It can be seen from Table 1 that the organic-inorganic composite layer is disposed on the surface of the negative electrode substrate in situ, so that volume expansion of the negative electrode plate may be reduced, the formation of lithium dendrites may be reduced, and the cycle performance of the battery may be improved.

It can be seen from test results of Examples 1 to 21 and Comparative Example 4 that the organic-inorganic composite layer is formed on the surface of the negative electrode substrate in situ, so that the peel strength between the organic-inorganic composite layer and the negative electrode substrate may be improved, the organic-inorganic composite layer may be closely combined with the negative electrode substrate, and volume expansion of the negative electrode plate may be further reduced. Meanwhile, first inorganic component particles may be uniformly dispersed in the organic-inorganic composite layer, so that the organic-inorganic composite layer is more compact and uniform, thereby better regulating a lithium metal deposition behavior, further reducing the formation of lithium dendrites and side reactions. Therefore, capacity losses of the battery may also be reduced, and the cycle performance of the battery may be improved.

In Comparative Example 4, the organic-inorganic composite layer is formed using a conventional coating method, the peel strength between the organic-inorganic composite layer and the negative electrode substrate is relatively low, and meanwhile, the nano-inorganic particles also have problems such as easy agglomeration and poor dispersion in an organic phase, which leads to relatively large volume expansion, severe lithium precipitation, and insufficient battery cycle performance of the negative electrode plate prepared in Comparative example 4.

It can also be seen from test results of Examples 1 to 21 and Comparative Examples 1 to 4 that the negative electrode plate provided in the embodiments of the present application may also enable the battery to withstand a larger charging current, and the battery also has good cycle performance under large charging current.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. Additionally, the scope of the present application also include various modifications to the embodiments conceived by those skilled in the art, and other embodiments constructed by combining some constituent elements in the embodiment without departing from the spirit of the present application.

Table 1

| No. | Polymer | | First inorganic component | | Weight ratio of polymer to first inorganic component | Second inorganic component | | Organic-inorganic composite layer | | | | | | Charging current density (mA/cm²) | Capacity retention ratio after 50 cycles (%) | Lithium precipitation | Thickness expansion ratio (%) |
|---|---|---|---|---|---|---|---|---|---|---|---|---|---|---|---|---|---|
| | Type | Content (%) | Type | Content (%) | | Type | Content (%) | Thickness (μm) | Elastic modulus (Mpa) | Electrolyte solution swelling ratio (%) | Ionic conductivity (mS/cm) | Elastic deformation (%) | Peel strength (N/m) | | | | |
| Example 1 | Polybutylcyanoacrylate | 56.7 | LiI | 28.3 | 2:1 | LiFSI | 15 | 0.1 | 48 | 17 | 0.12 | 123 | 2400 | 2 | 90 | Minor | 13 |
| Example 2 | Hydrogenated nitrile rubber | 56.7 | Li₂S | 28.3 | 2:1 | LiDFOB | 15 | 0.1 | 42 | 21 | 0.56 | 280 | 2000 | 2 | 91 | Minor | 14 |
| Example 3 | Polyisoprene | 56.7 | Li₃N | 28.3 | 2:1 | LiBOB | 15 | 0.1 | 35 | 19 | 0.23 | 310 | 2100 | 2 | 89 | Minor | 16 |
| Example 4 | Polystyrene | 56.7 | Li₃P | 28.3 | 2:1 | LiTFSI | 15 | 0.1 | 53 | 16 | 0.13 | 97 | 1700 | 2 | 90 | Minor | 14 |
| Example 5 | Polytrimethylene carbonate | 56.7 | LiI | 28.3 | 2:1 | LiFSI | 15 | 0.1 | 50 | 24 | 1.6 | 146 | 1900 | 3 | 95 | None | 8 |
| Example 6 | Polypropylene oxide | 56.7 | Li₂S | 28.3 | 2:1 | LiBF₄ | 15 | 0.1 | 31 | 36 | 3.4 | 169 | 2000 | 3 | 97 | None | 6 |
| Example 7 | Polybutylcyanoacrylate | 75.6 | LiI | 9.4 | 8:1 | LiFSI | 15 | 0.1 | 23 | 11 | 0.01 | 133 | 2800 | 0.5 | 73 | Moderate | 102 |
| Example 8 | Polybutylcyanoacrylate | 70.8 | LiI | 14.2 | 5:1 | LiFSI | 15 | 0.1 | 32 | 14 | 0.03 | 131 | 2550 | 1 | 83 | Minor | 62 |
| Example 9 | Polybutylcyanoacrylate | 14.2 | LiI | 70.8 | 1:5 | LiFSI | 15 | 0.1 | 53 | 38 | 0.21 | 21 | 1500 | 1 | 85 | Minor | 51 |
| Example 10 | Polybutylcyanoacrylate | 9.4 | LiI | 75.6 | 1:8 | LiFSI | 15 | 0.1 | 59 | 32 | 0.32 | 8 | 500 | 0.5 | 76 | Moderate | 114 |
| Example 11 | Polybutylcyanoacrylate | 64.7 | LiI | 32.3 | 2:1 | LiFSI | 3 | 0.1 | 57 | 20 | 0.06 | 93 | 2600 | 0.5 | 74 | Moderate | 108 |
| Example 12 | Polybutylcyanoacrylate | 63.3 | LiI | 31.7 | 2:1 | LiFSI | 5 | 0.1 | 53 | 19 | 0.08 | 109 | 2500 | 1 | 86 | Minor | 58 |
| Example 13 | Polybutylcyanoacrylate | 44.0 | LiI | 22.0 | 2:1 | LiFSI | 34 | 0.1 | 38 | 14 | 0.19 | 77 | 1300 | 2 | 87 | Minor | 36 |
| Example 14 | Polybutylcyanoacrylate | 33.3 | LiI | 16.7 | 2:1 | LiFSI | 50 | 0.1 | 19 | 11 | 0.23 | 31 | 800 | 1 | 83 | Minor | 61 |
| Example 15 | Polybutylcyanoacrylate | 26.7 | LiI | 13.3 | 2:1 | LiFSI | 60 | 0.1 | 12 | 9 | 0.19 | 7 | 600 | 0.5 | 76 | Moderate | 109 |

| No. | Polymer | | First inorganic component | | Weight ratio of polymer to first inorganic component | Second inorganic component | | Organic-inorganic composite layer | | | | | | Charging current density (mA/cm²) | Capacity retention ratio after 50 cycles (%) | Lithium precipitation | Thickness expansion ratio (%) |
|---|---|---|---|---|---|---|---|---|---|---|---|---|---|---|---|---|---|
| | Type | Content (%) | Type | Content (%) | | Type | Content (%) | Thickness (μm) | Elastic modulus (Mpa) | Electrolyte solution swelling ratio (%) | Ionic conductivity (mS/cm) | Elastic deformation (%) | Peel strength (N/m) | | | | |
| Example 16 | Polybutylcyanoacrylate | 56.7 | LiI | 28.3 | 2:1 | LiFSI | 15 | 0.02 | 48 | 28 | 3.4 | 9 | 2000 | 0.5 | 75 | Moderate | 107 |
| Example 17 | Polybutylcyanoacrylate | 56.7 | LiI | 28.3 | 2:1 | LiFSI | 15 | 0.05 | 48 | 24 | 2.3 | 98 | 2200 | 2 | 89 | Minor | 18 |
| Example 18 | Polybutylcyanoacrylate | 56.7 | LiI | 28.3 | 2:1 | LiFSI | 15 | 1 | 48 | 15 | 0.10 | 124 | 2600 | 2 | 86 | Minor | 24 |
| Example 19 | Polybutylcyanoacrylate | 56.7 | LiI | 28.3 | 2:1 | LiFSI | 15 | 3 | 48 | 14 | 0.08 | 125 | 2700 | 1 | 84 | Minor | 38 |
| Example 20 | Polybutylcyanoacrylate | 56.7 | LiI | 28.3 | 2:1 | LiFSI | 15 | 5 | 48 | 12 | 0.07 | 126 | 2800 | 1 | 82 | Minor | 54 |
| Example 21 | Polybutylcyanoacrylate | 56.7 | LiI | 28.3 | 2:1 | LiFSI | 15 | 8 | 48 | 9 | 0.01 | 86 | 3200 | 0.5 | 73 | Moderate | 112 |
| Comparative example 1 | / | / | / | / | / | / | / | / | / | / | / | / | / | 0.1 | 55 | Severe | 163 |
| Comparative example 2 | / | / | LiI | 100 | / | / | / | 0.1 | / | / | / | / | / | 0.3 | 64 | Severe | 129 |
| Comparative example 3 | Polybutylcyanoacrylate | 85 | / | / | / | LiFSI | 15 | 0.1 | 33 | 15 | 0.008 | 112 | 300 | 0.1 | 61 | Severe | 136 |
| Comparative example 4 | Polybutylcyanoacrylate | 56.7 | LiI | 28.3 | 2:1 | LiFSI | 15 | 0.1 | 32 | 25 | 0.10 | 93 | 400 | 0.3 | 72 | Severe | 119 |

EP 4 654 282 A1

**Claims**

1. A negative electrode plate, wherein

   the negative electrode plate comprises a negative electrode substrate and an organic-inorganic composite layer located on at least one surface of the negative electrode substrate;
   the negative electrode substrate comprises a first substrate layer close to the organic-inorganic composite layer, the first substrate layer comprises a first metal material, and the first metal material comprises one or a plurality of elemental lithium or a lithium alloy;
   the organic-inorganic composite layer comprises a polymer and a first inorganic component, and the first inorganic component comprises one or a plurality of LiI, LiF, $Li_2S$, $Li_3N$, or $Li_3P$; and
   the peel strength between the organic-inorganic composite layer and the negative electrode substrate is greater than or equal to 500 N/m.

2. The negative electrode plate according to claim 1, wherein the peel strength between the organic-inorganic composite layer and the negative electrode substrate is 600 N/m to 3200 N/m, optionally 800 N/m to 2800 N/m.

3. The negative electrode plate according to claim 1 or 2, wherein the organic-inorganic composite layer satisfies at least one of the following conditions (1) to (5):

   (1) the elastic modulus of the organic-inorganic composite layer is 0.1 MPa to 70 MPa, optionally 19 MPa to 53 MPa;
   (2) the elastic deformation of the organic-inorganic composite layer is 7% to 700%, optionally 9% to 310%;
   (3) the electrolyte solution swelling ratio of the organic-inorganic composite layer at 25°C is 9% to 60%, optionally 11% to 38%;
   (4) the ionic conductivity of the organic-inorganic composite layer at 25°C is 0.001 mS/cm to 5 mS/cm, optionally 0.03 mS/cm to 3.4 mS/cm; or
   (5) the thickness of the organic-inorganic composite layer is 0.005 $\mu$m to 10 $\mu$m, optionally 0.02 $\mu$m to 5 $\mu$m.

4. The negative electrode plate according to any one of claims 1 to 3, wherein the organic-inorganic composite layer comprises a first surface close to the negative electrode substrate and a second surface away from the negative electrode substrate, the mass content of the first inorganic component in the first surface is denoted as $W_1$, the mass content of the first inorganic component in the second surface is denoted as $W_2$, and $W_1 > W_2$.

5. The negative electrode plate according to any one of claims 1 to 4, wherein based on the total weight of the organic-inorganic composite layer, the content of the polymer in the organic-inorganic composite layer is denoted as a, the content of the first inorganic component is denoted as b, and a:b is 1:5 to 5:1, optionally 1:3 to 3:1;

   optionally, a is 8wt% to 80wt%, more optionally 14wt% to 71wt%; and
   optionally, b is 8wt% to 80wt%, more optionally 14wt% to 71wt%.

6. The negative electrode plate according to any one of claims 1 to 5, wherein the organic-inorganic composite layer further comprises a second inorganic component;

   optionally, the second inorganic component comprises one or a plurality of a lithium salt or a solid electrolyte; and/or
   optionally, based on the total weight of the organic-inorganic composite layer, the total content of the second inorganic component in the organic-inorganic composite layer is denoted as c, and c is greater than 0 and less than or equal to 55wt%, optionally 5wt% to 50wt%.

7. The negative electrode plate according to claim 6, wherein

   the lithium salt comprises one or a plurality of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium bis(oxalato)borate, lithium difluoro(oxalato)borate, lithium bis(oxyalyl)difluorophosphate, lithium tetrafluoro(oxalato)phosphate, lithium difluorophosphate, or lithium trifluoromethanesulfonate; and/or
   the solid electrolyte comprises one or a plurality of an oxide-type inorganic solid electrolyte, a sulfide-type inorganic solid electrolyte, or a halide-type inorganic solid electrolyte; optionally, the oxide-type inorganic solid electrolyte comprises one or a plurality of a NASICON-type solid electrolyte, a garnet-type solid electrolyte, a perovskite-type solid electrolyte, or a LISICON-type solid electrolyte; and optionally, the sulfide-type inorganic solid electrolyte comprises one or a plurality of a sulfide-type crystalline solid electrolyte or a sulfide glass-type solid electrolyte.

8.  The negative electrode plate according to claim 6 or 7, wherein the organic-inorganic composite layer further comprises a third inorganic component;

    optionally, the third inorganic component comprises one or a plurality of a film-forming additive or an inorganic filler; and/or
    optionally, based on the total weight of the organic-inorganic composite layer, the total content of the third inorganic component in the organic-inorganic composite layer is denoted as d, and d is greater than 0 and less than or equal to 20wt%.

9.  The negative electrode plate according to claim 8, wherein

    the film-forming additive comprises one or a plurality of fluoroethylene carbonate, vinylene carbonate, vinylethylene carbonate, ethylene sulfate, propylene sulfite, ethylene sulfite, diethyl sulfite, dimethyl sulfite, butanesultone, or tris(trimethylsilyl)phosphate; and/or
    the inorganic filler comprises one or a plurality of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, or barium titanate.

10. The negative electrode plate according to any one of claims 1 to 9, wherein the volume distribution particle size Dv50 of the first inorganic component is less than or equal to 80 nm, optionally 10 nm to 30 nm.

11. The negative electrode plate according to any one of claims 1 to 10, wherein

    the polymer comprises one or a plurality of a polymer with high viscosity, a polymer with an ion conduction function, or a polymer able to react with the first metal material; and
    optionally, the polymer comprises one or a plurality of poly(methyl acrylate), polyurethane, natural rubber, polyisoprene, polystyrene, polyether, polyethylene oxide, polycarbonate, poly(methyl methacrylate), ionomer, polyacrylonitrile, polycyanoacrylate, polymethacrylic acid, hydrogenated nitrile rubber, polyvinyl alcohol, or respective derivatives thereof.

12. The negative electrode plate according to any one of claims 1 to 11, wherein the first substrate layer further comprises a first negative electrode active material; and
    optionally, the first negative electrode active material comprises a carbon-based material, and more optionally comprises one or a plurality of graphite or hard carbon.

13. The negative electrode plate according to any one of claims 1 to 12, wherein the negative electrode substrate further comprises a negative electrode current collector layer away from the organic-inorganic composite layer, and the first substrate layer is located on at least one surface of the negative electrode current collector layer.

14. The negative electrode plate according to claim 13, wherein the negative electrode substrate further comprises a second negative electrode active material layer located between the first substrate layer and the negative electrode current collector layer, and the second negative electrode active material layer comprises a second negative electrode active material; and
    optionally, the second negative electrode active material comprises one or a plurality of a carbon-based material, lithium titanate, or a silicon-based material.

15. A method for preparing a negative electrode plate, comprising the following steps of:

    providing a negative electrode substrate, wherein the negative electrode substrate comprises a first substrate layer, the first substrate layer comprises a first metal material, and the first metal material comprises one or a plurality of elemental lithium or a lithium alloy;

providing a first reaction component, wherein the first reaction component comprises one or a plurality of $I_2$, S, $N_2$, or P;

carrying out a contact reaction between the first reaction component and the first metal material in the first substrate layer to form a first inorganic component in situ on a surface of the first substrate layer, wherein the first inorganic component comprises one or a plurality of LiI, LiF, $Li_2S$, $Li_3N$, or $Li_3P$;

providing a coating solution, wherein the coating solution comprises a polymer and/or a monomer used for forming a polymer;

coating the surface of the first substrate layer with the coating solution, and forming an organic-inorganic composite layer after a reaction to obtain the negative electrode plate, wherein the reaction comprises at least one of a reaction between the polymer and the first metal material and/or the first inorganic component and an in-situ polymerization reaction of the monomer.

16. The method according to claim 15, wherein

a manner for carrying out the contact reaction between the first reaction component and the first metal material in the first substrate layer involves evaporation, optionally vacuum evaporation or physical evaporation; and/or

the reaction temperature of the contact reaction between the first reaction component and the first metal material in the first substrate layer is 30°C to 200°C, optionally 50°C to 180°C; and/or

the reaction time of the contact reaction between the first reaction component and the first metal material in the first substrate layer is less than or equal to 5h, optionally less than or equal to 2h; and/or

the first reaction component is in the form of vapor.

17. The method according to claim 15 or 16, wherein the coating solution further comprises one or a plurality of an initiator, a lithium salt, or a solid electrolyte.

18. A battery cell, comprising an electrode assembly, wherein the electrode assembly comprises the negative electrode plate according to any one of claims 1 to 14 and/or the negative electrode plate prepared by the method according to any one of claims 15 to 17.

19. A battery, comprising the battery cell according to claim 18.

20. An electric device, comprising the battery according to claim 19.

FIG. 1

FIG. 2

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
|---|
| **PCT/CN2023/137467** |

| A. | CLASSIFICATION OF SUBJECT MATTER |
|---|---|

H01M4/134(2010.01)i; H01M4/36(2006.01)i; H01M4/38(2006.01)i; H01M4/40(2006.01)i; H01M4/58(2010.01)i; H01M4/60(2006.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS: CNTXT; ENTXT; ENTXTC; DWPI; CNKI: 锂, 负极, 阳极, 聚合物, 聚丙烯腈, 聚丙烯酸, 剥离强度, N/m, 碘化锂, 氟化锂, 硫化锂, 氮化锂, 磷化锂, lii, lif, li2s, li3n, li3p, lithium, negative, anode, polymer, polyacrylonitrile, polyacrylic, peel, strength, iodide, fluoride, sulfide, nitride, phosphide

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113437257 A (NINGDE CONTEMPORARY AMPEREX TECHNOLOGY CO., LTD.) 24 September 2021 (2021-09-24) description, paragraphs 40-118, and figure 1 | 1-5, 10-20 |
| Y | CN 113437257 A (NINGDE CONTEMPORARY AMPEREX TECHNOLOGY CO., LTD.) 24 September 2021 (2021-09-24) description, paragraphs 40-118, and figure 1 | 6-9 |
| Y | CN 109818048 A (JIANGXI STAR ENERGY CO., LTD.) 28 May 2019 (2019-05-28) description, paragraphs 5-170, and figures 1-2 | 6-9 |
| Y | CN 111864181 A (INSTITUTE OF PHYSICS, CHINESE ACADEMY OF SCIENCES) 30 October 2020 (2020-10-30) description, paragraphs 4-22 | 6-9 |
| Y | CN 112563461 A (NINGDE CONTEMPORARY AMPEREX TECHNOLOGY CO., LTD.) 26 March 2021 (2021-03-26) description, paragraphs 14-51 | 6-9 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 January 2024** | **04 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/137467**

### C. DOCUMENTS CONSIDERED TO BE RELEVANT

| Category* | Citation of document, with indication, where appropriate, of the relevant passages | Relevant to claim No. |
|---|---|---|
| A | CN 108807851 A (SAMSUNG ELECTRONICS CO., LTD. et al.) 13 November 2018 (2018-11-13)<br>entire document | 1-20 |
| A | CN 113611910 A (CHONGQING JINTIANYI NEW ENERGY TECHNOLOGY CO., LTD.) 05 November 2021 (2021-11-05)<br>entire document | 1-20 |
| A | WO 2020050896 A1 (NANOTEK INSTRUMENTS, INC.) 12 March 2020 (2020-03-12)<br>entire document | 1-20 |

Form PCT/ISA/210 (second sheet) (July 2022)

**INTERNATIONAL SEARCH REPORT**
Information on patent family members

International application No.

**PCT/CN2023/137467**

| Patent document cited in search report | | | Publication date (day/month/year) | Patent family member(s) | | | Publication date (day/month/year) |
|---|---|---|---|---|---|---|---|
| CN | 113437257 | A | 24 September 2021 | None | | | |
| CN | 109818048 | A | 28 May 2019 | None | | | |
| CN | 111864181 | A | 30 October 2020 | None | | | |
| CN | 112563461 | A | 26 March 2021 | None | | | |
| CN | 108807851 | A | 13 November 2018 | EP | 3396736 | A1 | 31 October 2018 |
| | | | | EP | 3396736 | B1 | 23 September 2020 |
| | | | | US | 2018316051 | A1 | 01 November 2018 |
| | | | | US | 10971753 | B2 | 06 April 2021 |
| CN | 113611910 | A | 05 November 2021 | None | | | |
| WO | 2020050896 | A1 | 12 March 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310423012